(19) Europäisches Patentamt
European Patent Office
Office européen des brevets

(11) **EP 2 251 830 A1**

(12) **EUROPEAN PATENT APPLICATION**
published in accordance with Art. 153(4) EPC

(43) Date of publication:
**17.11.2010 Bulletin 2010/46**

(51) Int Cl.:
***G06T 7/00*** *(2006.01)*

(21) Application number: **09718102.8**

(22) Date of filing: **02.03.2009**

(86) International application number:
**PCT/JP2009/053824**

(87) International publication number:
**WO 2009/110410 (11.09.2009 Gazette 2009/37)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **04.03.2008 JP 2008053925**

(71) Applicant: **NEC Corporation**
**Minato-ku**
**Tokyo 108-8001 (JP)**

(72) Inventor: **AKIYAMA, Tatsuo**
**Tokyo 108-8001 (JP)**

(74) Representative: **Glawe, Delfs, Moll**
**Patent- und Rechtsanwälte**
**Postfach 26 01 62**
**80058 München (DE)**

(54) **IMAGE MATCHING DEVICE, IMAGE MATCHING FEATURE AMOUNT STORAGE MEDIUM, IMAGE MATCHING METHOD, AND IMAGE MATCHING PROGRAM**

(57) Provided is an image matching device or the like capable of matching with high precision.

Matching with higher precision can be performed by configuring the image matching device so as to use the cumulative pixel value ratio of a connected region or the sum region which is a different invariant in affine transformation as a feature amount. Additionally, matching with higher precision is realized by using the relative positional information of the region.

FIG.1

**Description**

TECHNICAL FIELD

The invention relates to an image matching device and to an image matching technology to match an image about the same object.

BACKGROUND ART

A related image matching method is described in Non-Patent Literature 1. In the Non-Patent Literature 1, an example, in which an image matching device is provided for image retrieving of an English document, is described.
The related image matching process can be divided into a registering process and a matching process. In the registering process, following processes are performed for each image to be pre-registered.
Initially, when one registering image is inputted, following processes are performed.
(Registering procedure A) A center of gravity of a word region in the English document is extracted as a feature point.
Next, a combination of feature points having an order is calculated from the extracted feature point, and a feature point arrangement is calculated. Specifically, following processes are performed.
(Registering procedure C) Next, p, that is one of feature points, is extracted. Next, n points near the feature point are extracted.
(Registering procedure D) Next, m points are extracted from the n points near the feature point.
(Registering procedure E) Next, one appropriate point is selected, as p0, from the extracted m points. Next, a row Lm of the feature points is generated by lining up m points clockwise with the p0 in the lead, centering the p.
(Registering procedure F) Next, rows Lf of the feature points are generated. The rows Lf are all rows that are selected f points from the Lm while keeping an order. The all rows Lf are lined up in a lexicographic order.
The registering procedure C is continued till all the feature points are selected as the p. The registering procedure D is continued till processes on all combinations of m points extracted from n points are completed. The number of the rows of the feature points, which are obtained through procedures from the registering procedure C to the registering procedure F, is generally more than one.
(Registering procedure G) A row of invariants is calculated from the rows Lf of feature points. The row of invariants is stored as a feature amount list, together with a number uniquely designating the registering image (hereinafter, referred to as registering image number) and a feature point number uniquely designating the feature point (hereinafter, referred to as feature point number).
The stored feature amount list is utilized for a matching process described below. In the Non-Patent Literature 1, a method is proposed, for storing the feature amount list by using a hash after discretizing the invariant in order to speed up retrieval. Since the method has no relation to the present invention, descriptions on the method are omitted.
The registering processes on one registering image are described above. The processes are performed for all registering images.
In the matching process, when a retrieval image is inputted, following processes are performed.
(Retrieving procedure A) The center of gravity of the word region in the English document is extracted as the feature point.
Next, a combination of feature points having an order is calculated from the extracted feature point. The feature point arrangement is generated by circulating the calculated combination. Specifically, following processes are performed.
(Retrieving procedure C) Next, p, that is one of feature points, is extracted. Next, n points near the feature point p are extracted.
(Retrieving procedure D) Next, m points are extracted from the n points near the feature point p.
(Retrieving procedure E) Next, a one appropriate point is selected, as p0, from the extracted m points. Next, a row Lm of the feature points is generated by lining up the m points clockwise with the p0 in the lead, by centering on the p.
(Retrieving procedure F) Next, rows Lf of the feature points are obtained. The rows Lf are all rows that are selected f points from the Lm while keeping an order. The rows Lf are lined up in a lexicographic order. The retrieving procedure C is continued till all the feature points are selected as the p. The retrieving procedure D is continued till processes on all combinations of m points extracted from n points are completed. The retrieving procedure E is continued till all of m points are selected as p0.
The number of the rows of the feature points, which are obtained through processes from the retrieving procedure C to the retrieving procedure F, is generally more than one.
Next, following processes are performed.
(Retrieving procedure G) A row of invariants is calculated from the rows Lf of feature points.
(Retrieving procedure H) The calculated row of invariants is matched to the row of invariants in the feature amount list which is stored during the registering processes. When these are matched, the number of matches (the number of votes) with the registering image number in the feature amount list is incremented (voted) by one.

In the Non-Patent Literature 1, a process for preventing mismatching of other row of invariants is proposed. Since the processing method has no relation to the present invention, descriptions on the method are omitted. The processes of these procedures are continued till processes for all registering images are completed.

Finally, following processes are performed based on the number of matches for each registering image (the number of votes obtained when votes for each registering image are performed).

By using the equation, $S(d_i)=V(d_i)-cN(d_i)$, scores for each registering image are calculated. Then, the registering image having the maximum score is outputted as a matching result. Here, $d_i$ is a registering image number, $V(d_i)$ is the number of votes on the registering image of the registering image number $d_i$, $N(d_i)$ is the number of feature points included in the registering image of the registering image number $d_i$, and c is a proportionality constant of erroneous vote and the number of feature points determined in a preliminary experiment.

While these registering processes and matching processes are performed, a value f changes depending on a calculating method of invariant on allowed conversion between the registering image and the retrieval image.

In the Non-Patent Literature 1, the example is described, in which a value that calculated as area ratio of two triangles each of which is composed of f = 4 points (hereinafter, referred to as feature point triangle area ratio) is used as an affine invariant. The affine invariant includes a characteristic that even if arbitrary affine transformation occurs between two images, the same value is obtained from a combination of corresponding points. Therefore, even if deformation due to the arbitrary affine transformation occurs between the registering image and the retrieval image, rows of invariants which are calculated from the feature point arrangement obtained from the registering image and rows of invariants which are calculated from the feature point arrangement obtained from retrieval image corresponding thereto, become the same in principle.

The image matching device using the affine invariant as an invariant is configured to enable matching with high precision when it can be considered that deformation between the registering image and the retrieval image can be represented by the affine transformation.

Another technology is disclosed in Patent Literature 1. The technology enables matching even if deformation between the registering image and the retrieval image due to affine transformation occurs.

As disclosed in paragraphs 0076-0080 of Patent Literature 1, in the technology, an affine transformation parameter is determined so that a correlation value between an input gray-scale image and a referential gray-scale image increases, an affine transformation superimposed input gray-scale image is generated from the input gray-scale image using the parameter, the input image is replaced with the affine transformation superimposed input gray-scale image, and these processes above are repeated.

Patent Literature 1: Japanese Patent Application Laid-Open No. 2000-259836
Non-Patent Literature 1: Tomohiro NAKAI et al., "Use of Affine Invariants and Similarity Invariants in Fast Camera-based Document Image Retrieval", IEICE Technical Report, (Pattern Recognition and Media Understanding PRMU-184 to 201) The Institute of Electronics, Information and Communication Engineers, 16 February, 2006 (16. 02, 06), pp. 25-30

DISCLOSURE OF THE INVENTION

TECHNICAL PROBLEM

The first problem is that a feature amount list calculated for an image A and a feature amount list calculated for a different image B which is not essentially identical to the image A, but from which positions of almost the same feature points as the feature points obtained from the image A is obtained, erroneously match. "Erroneously match" means that feature amount lists for respective images are identical as a matching result, and that the images are essentially not identical as an image. Image matching with high precision may be impossible due to the first problem.

The problem arises from using the feature point triangle area ratio as a feature amount. The problem occurs, in particular, (1) when the feature point (the center of gravity) is located at almost the same position even in a different connected region (character), and (2) when three feature points forming a triangle are linearly arranged (when a calculation result for the feature point triangle area ratio becomes zero or infinity).

It is cited as the reason for the above case (1) that the feature amount list is generated by using a value which is calculated as the feature amount only from the center of gravity. Such problem frequently occurs, in particular, in a character row image in which characters are arranged at almost regular intervals.

It is cited as the reason for the above case (2) that the feature point triangle area ratio is used as an element of the feature amount list. When three feature points forming a triangle are linearly arranged, a numerator (or denominator) in calculation of the feature point triangle area ratio becomes zero. When the value of the numerator (denominator) becomes zero, the value of the numerator (denominator) becomes zero (infinity) regardless of the value of the denominator (numerator). These cause mismatching of the feature amount list.

The present invention is provided in order to solve the problem, and one of objects of the invention is to provide an image matching device enabling matching with high precision, an image matching feature amount storage medium for image matching, an image matching method, and an image matching program.

SOLUTION TO PROBLEM

To achieve the object, the invention includes following characteristics.

The image matching device of the invention includes cumulative pixel value ratio calculation means that calculates a cumulative pixel value which is a sum of pixel values from a specified region in an image and that calculates a ratio of two specified cumulative pixel values, and is operable to calculate a feature amount list in which a cumulative pixel value ratio is a feature amount (hereinafter, referred to as feature vector). The object of the invention can be attained by using such configuration, calculating the feature amount list calculated from the cumulative pixel value ratio, matching the feature vector calculated from a registering image and the feature vector calculated from a retrieval image, and performing image matching by using the number of pairs of the matched feature vector.

The above object is achieved by the image matching method corresponding to the above image matching device.

The above object is achieved by the image matching method having the above configuration, a computer program realizing a corresponding device by a computer, and computer-readable storage medium storing the computer program.

ADVANTAGEOUS EFFECTS OF THE INVENTION

The present invention makes matching with high precision possible, even when the matching with high precision cannot be preformed in a related image matching device when the feature point triangle area ratio is used as the feature amount.

The reason is that since the cumulative pixel value ratio is used as the feature amount, the present invention is not affected by conditions in which the feature points at the almost same position are obtained despite different regions, or by conditions in which a feature point triangle area becomes zero.

DESCRIPTION OF EMBODIMENTS

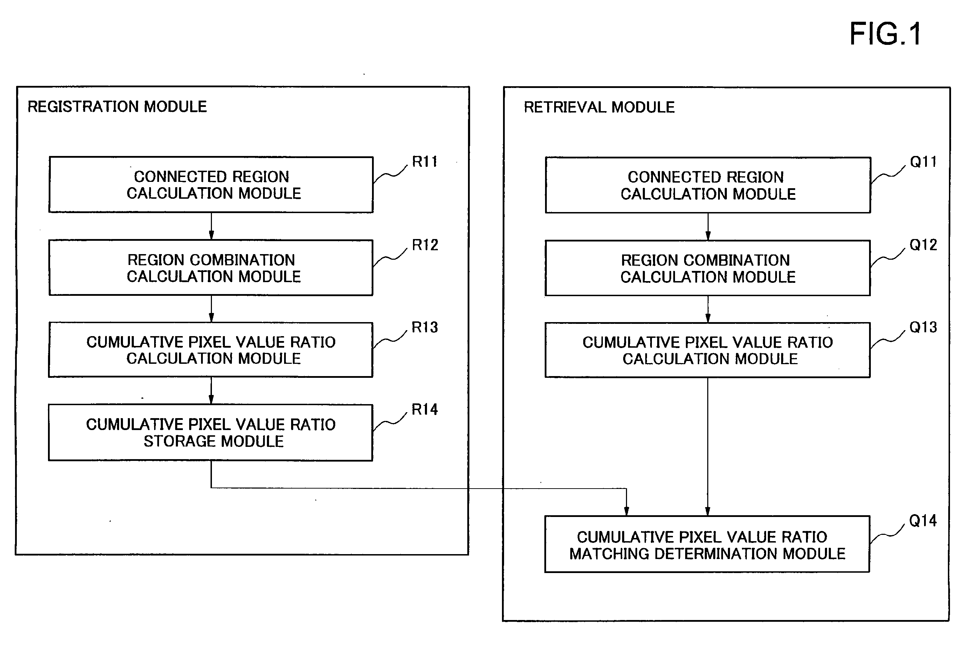

Referring to FIG. 1, a first embodiment of the invention includes a connected region calculation module R11 in a registration module, a region combination calculation module R12 in the registration module, a cumulative pixel value ratio calculation module R13 in the registration module, a cumulative pixel value ratio storage module R14 in the registration module, a connected region calculation module Q11 in a retrieval module, a region combination calculation module Q12 in the retrieval module, a cumulative pixel value ratio calculation module Q13 in the retrieval module, and a cumulative pixel value ratio matching determination module Q14 in the retrieval module.

Each of these operates as follows basically.

The connected region calculation module R11 in the registration module extracts a connected region from an inputted registering image by using an existing method. For example, an inputted image is binarized by using an existing method, and the connected region is labeled by using an existing labeling method. The connected region calculation module R11 in the registration module performs the above processes to extract the connected region. An existing image quality improving process may be performed before or after the binarization. Considering that a center of gravity of a connected component is calculated from the connected component, the above processes correspond to the registering procedure A in the registering process described in the background art.

The region combination calculation module R12 in the registration module calculates a combination of the connected regions from the connected regions calculated in the connected region calculation module R11 in the registration module. Considering that one center of gravity of the connected component is determined for one connected component, a combination row of regions can be calculated based on the same procedures as the registering procedure C, the registering procedure D, the registering procedure E, and the registering procedure F described in the background art. However, the registering procedure F is subject to f=2. In the process corresponding to the registering procedure D, when m regions are extracted from n regions, the m regions may not be necessarily selected from the n regions. For example, the region combination calculation module R12 in the registration module may generate a sum region of several connected regions in connected regions obtained in advance, as a new region, and may include the region in the m regions.

The cumulative pixel value ratio calculation module R13 in the registration module calculates a feature vector (feature amount list) from a combination of regions (row) calculated in the region combination calculation module R12 in the registration module. The cumulative pixel value ratio calculation module R13 in the registration module performs calculation of area ratio of two regions included in the combination of respective regions with respect to the combinations of all regions included in the region combination row. As a result, when the input image is the gray-scale image, one feature vector is calculated for one region combination row.

The cumulative pixel value ratio storage module R14 in the registration module stores the feature vector calculated in the cumulative pixel value ratio calculation module R13 in the registration module together with at least information which can uniquely specify the registering image from which the feature vector is calculated.

The connected region calculation module Q11 in a retrieval module performs the same processes as the connected region calculation module R11 in the registration module.

The region combination calculation module Q12 in the retrieval module performs the same processes as the region combination calculation module R12 in the registration module. In processes corresponding to the registering procedure E in process, the processes of the region combination calculation module Q12 in the retrieval module may be continued till all of m points are selected as p0, like the retrieving procedure E described in the background art.

The cumulative pixel value ratio calculation module Q13 in the retrieval module performs the same processes as the cumulative pixel value ratio calculation module R13 in the registration module.

The cumulative pixel value ratio calculation module Q14 in the retrieval module compares the feature vector calculated in the cumulative pixel value ratio calculation module Q 13 in the retrieval module with the feature vector stored in the cumulative pixel value ratio storage module R14 in the registration module, and determines whether or not these feature vectors match. An existing determining technique may be used as a technique of determining matching. For example, the cumulative pixel value ratio calculation module Q14 in the retrieval module may calculate degree of discrepancy (or degree of similarity) between the vectors by using a city-block distance, a sum of squared errors, a Euclidean distance, an angle between two vectors, an inner product of two vectors, or the like. When the degree of discrepancy is smaller (or degree of similarity is larger) than a given threshold value, the cumulative pixel value ratio calculation module Q14 in the retrieval module may determines respective feature vectors match.

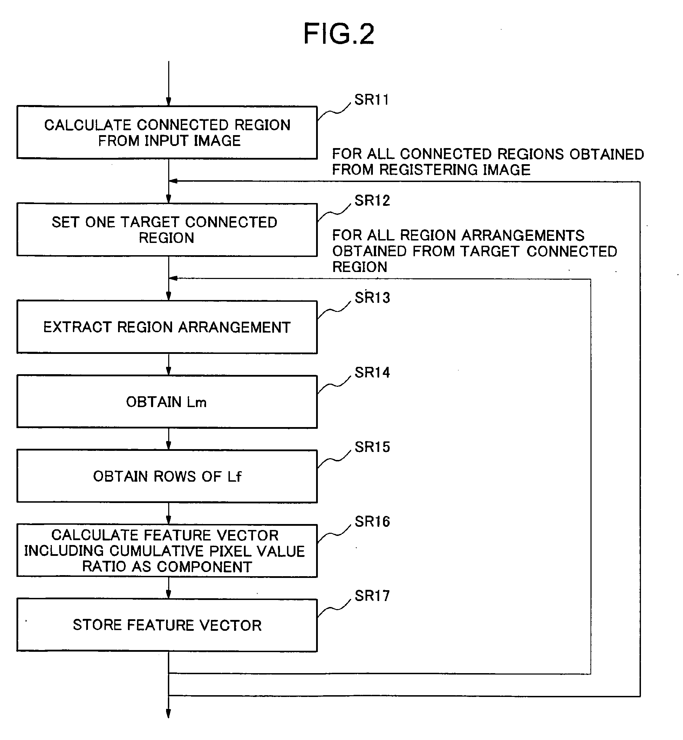

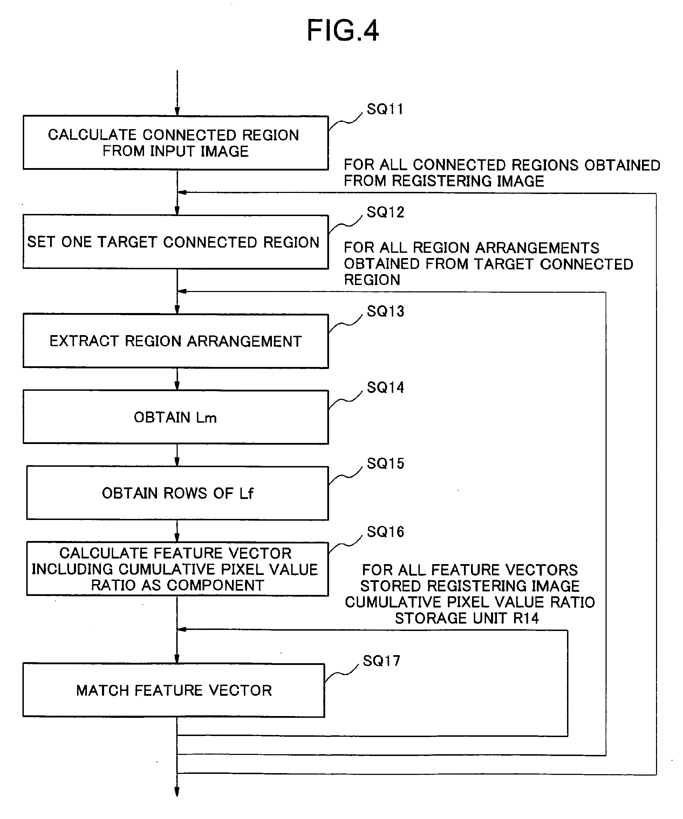

Next, referring to flowcharts in FIG. 2 and FIG. 4, the whole operations of the embodiment are described in detail. The whole processes include registering processes and retrieving processes. These processes may be performed by a CPU of the image matching device.

Initially, the registering processes are described.
The connected region calculation module R11 in the registration module calculates a connected region from an inputted image (step SR11 in FIG. 2: corresponding to the registering procedure A in the background art). Next, the region combination calculation module R12 in the registration module selects one target connected region p in the calculated connected regions (step SR12: corresponding to the registering procedure C in the background art). The region combination calculation module R12 in the registration module extracts m connected regions from n connected regions near the feature point (step SR13: corresponding to the registering procedure D in the background art). The region combination calculation module R12 in the registration module selects the connected region whose center of gravity is the closest center of gravity of the target connected region p as a target connected region p0. And the region combination calculation module R12 in the registration module generates a row Lm of the connected regions so that centers of gravity of respective connected regions line up clockwise with the p0 in the lead, by centering on the center of gravity of p (step SR14: almost corresponding to the registering procedure E in the background art). The region combination calculation module R12 in the registration module obtains rows Lf of the connected regions. The rows Lf are all rows which are selected f points from the Lm while keeping an order. The region combination calculation module R12 in the registration module lines up the rows Lf in a lexicographic order
(step SR15: corresponding to the registering procedure F in the background art).

The rows Lf calculated here are described as a following equation.

$$(L_2(0), \cdots, L_2(i), \cdots, L_2({}_mC_2 - 1))$$

Here, each $L_2(i)$ is described as a following equation.

$$L_2(i) = (L_2(i)^{(1)}, L_2(i)^{(2)})$$

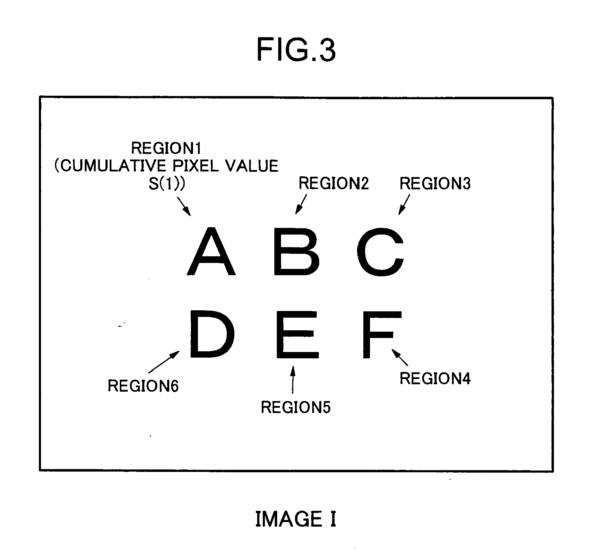

Here, $L_2(i)^{(j)}$ is the connected region. The connected region is described by the number which can uniquely specify the connected region. FIG. 3 illustrates regions and cumulative pixel values thereof. For the sake of simplification, the method using the connected regions is disclosed in the above descriptions. In the above descriptions, the connected region may not be used.

For example, the sum region of two or more than two connected regions may be described as $L_2(i)^{(j)}$.

Further, the cumulative pixel value ratio calculation module R13 in the registration module calculates a feature vector from the calculated rows Lf (step SR16). For example, the cumulative pixel value ratio calculation module R13 in the registration module calculates,

$$\left( \frac{S(L_2(0)^{(1)})}{S(L_2(0)^{(2)})}, \cdots, \frac{S(L_2(i)^{(1)})}{S(L_2(i)^{(2)})}, \cdots, \frac{S(L_2(_mC_2-1)^{(1)})}{S(L_2(_mC_2-1)^{(2)})} \right)$$

with respect to the rows Lf. Here, S(i) is the cumulative pixel value on the connected region i. The cumulative pixel value is a sum of pixel values of all pixels included in the connected region i. When the pixel value is represented by a binary, the cumulative pixel value indicates an area.

The cumulative pixel value ratio calculation module R13 in the registration module may calculate a cumulative pixel value ratio of the feature vector based on an inverse of each component of the feature vector above described.

The cumulative pixel value ratio storage module R14 in the registration module stores the feature vector calculated by the cumulative pixel value ratio calculation module R13 in the registration module together with information which can uniquely specify the registering image.

Next, the retrieving processes are described.

Initially, the connected region calculation module Q11 in the retrieval module calculates a connected region from an inputted image (step SQ11 in FIG. 4). Next, the region combination calculation module Q12 in the retrieval module calculates a row of connected regions like the registering process. Steps SQ12, SQ13, SQ14, and SQ15 in FIG. 4 perform the same operations as SR12, SR13, SR14, and SR15 in the registering process, respectively. If the row of the connected regions is represented as LfB, LfB is described as follows.

$$(L_2'(0), \cdots, L_2'(i), \cdots, L_2'(_mC_2-1))$$ .

Here, in the above equation, each $L_2'(i)$ is represented as follows.

$$L_2'(i) = (L_2'(i)^{(1)}, L_2'(i)^{(2)})$$ .

Here, each $L_2'(i)^{(j)}$ is the connected region. The connected region is represented by the number which can uniquely specify the connected region.

The cumulative pixel value ratio calculation module Q 13 in the retrieval module calculates a feature vector from the calculated LfB like the cumulative pixel value ratio calculation module R13 in the registration module (step SQ16). The cumulative pixel value ratio calculation module Q13 in the retrieval module calculates, for example, the following formula with respect to a row of the LfB,

$$\left( \frac{S(L_2'(0)^{(1)})}{S(L_2'(0)^{(2)})}, \cdots, \frac{S(L_2'(i)^{(1)})}{S(L_2'(i)^{(2)})}, \cdots, \frac{S(L_2'(_mC_2-1)^{(1)})}{S(L_2'(_mC_2-1)^{(2)})} \right)$$ .

The cumulative pixel value ratio calculation module Q14 in the retrieval module performs matching between the calculated feature vector and each of all the feature vectors stored in the cumulative pixel value ratio storage module R14 in the registration module. The cumulative pixel value ratio matching determination module Q14 in the retrieval module outputs a determined result on whether or not each feature vector stored in the cumulative pixel value ratio storage module R14 in the registration module matches the feature vector calculated by cumulative pixel value ratio calculation module Q13 in the retrieval module (step SQ17).

The effect of the embodiment is described below.
Characteristics of the cumulative pixel value ratio are described. For example, Non-Patent Literature 2 describes following facts.

Non-Patent Literature 2: Ikeyama, Tamotsu,. Toyokazu Hirayama, "Differentiation and Integration for Science and Technology," Shokabou Publishing, May 25, 2006, p. 137 (Non-Patent Literature 2 is cited from here)

Here, the following equation holds,

$$\iint_D f(x,y)dxdy = \iint_A f(\varphi(u,v),\phi(u,v))|J(u,v)|dudv \quad ,$$

wherein $J(u,v) = \begin{vmatrix} x_u & x_v \\ y_u & y_v \end{vmatrix} = \dfrac{\partial(x,y)}{\partial(u,v)}$ (citation ends).

Here, assume that affine transformation between $(x,y)$ that is a coordinate on a plane corresponding to the registering image (hereinafter, referred to as registering image plane) and $(x',y')$ that is a coordinate on a plane corresponding to the retrieving image (hereinafter, referred to as retrieving image plane), that is,

$\begin{pmatrix} x' \\ y' \end{pmatrix} = \begin{pmatrix} a & b \\ c & d \end{pmatrix}\begin{pmatrix} x \\ y \end{pmatrix} + \begin{pmatrix} e \\ f \end{pmatrix}$ holds, where each of $a$, $b$, $c$, $d$, $e$, $f$ is a constant.

Here, because the equation $J(x,y) = \begin{vmatrix} x'_x & x'_y \\ y'_x & y'_y \end{vmatrix} = \begin{vmatrix} a & b \\ c & d \end{vmatrix} = ad - bc$ holds, the equation

$$\iint_D f(x',y')dx'dy' = (ad - bc)\iint_A f(\varphi(x,y),\phi(x,y))dxdy$$

holds.
Assume that two closed regions A1 and A2 in the registering image plane corresponds to two closed regions D1 and D2 one-to-one respectively, and areas of A1, A2, D1, and D2 are determined.
Then, following two equations hold,

$$\iint_{D_1} f(x',y')dx'dy' = (ad - bc)\iint_{A_1} f(\varphi(x,y),\phi(x,y))dxdy$$

$$\iint_{D_2} f(x',y')dx'dy' = (ad - bc)\iint_{A_2} f(\varphi(x,y),\phi(x,y))dxdy \quad .$$

If a left-hand side and a right-hand side of the upper equation are divided by a left-hand side and a right-hand side of the lower equation, respectively, the following equation holds,

$$\frac{\iint_{D_1} f(x',y')dx'dy'}{\iint_{D_2} f(x',y')dx'dy'} = \frac{\iint_{A_1} f(\varphi(x,y),\phi(x,y))dxdy}{\iint_{A_2} f(\varphi(x,y),\phi(x,y))dxdy}.$$

Therefore, a value of $\dfrac{\iint_{D_1} f(x',y')dx'dy'}{\iint_{D_2} f(x',y')dx'dy'}$ becomes an amount which does not depend on affine transformation, that is, an affine invariant.

The image processed on a computer has a discrete value as a coordinate. Therefore, it is natural that a term represented by double integral is approximated by the cumulative pixel value ratio in a corresponding region. That is, the cumulative pixel value ratio is the affine invariant (approximation thereof). In a case that such an amount is used, even if affine transformation between the registering image and the retrieving image occurs, the feature vector calculated from a combination (row) of regions corresponding to Lf in the retrieving image is supposed to ideally have the same value as the feature vector calculated from a combination (row) Lf of regions in the registering image.

Suppose the constant function $f(x',y')=1$ (that is, $f(\varphi(x,y),\phi(x,y)) = 1$).

Then, the left-hand side is the area ratio of two closed regions D1 and D2 in the retrieving image, and the right-hand side is the area ratio of two closed regions A1 and A2 in the registering image. Therefore, the area ratio of two connected components becomes an invariant (approximation thereof) on affine transformation.

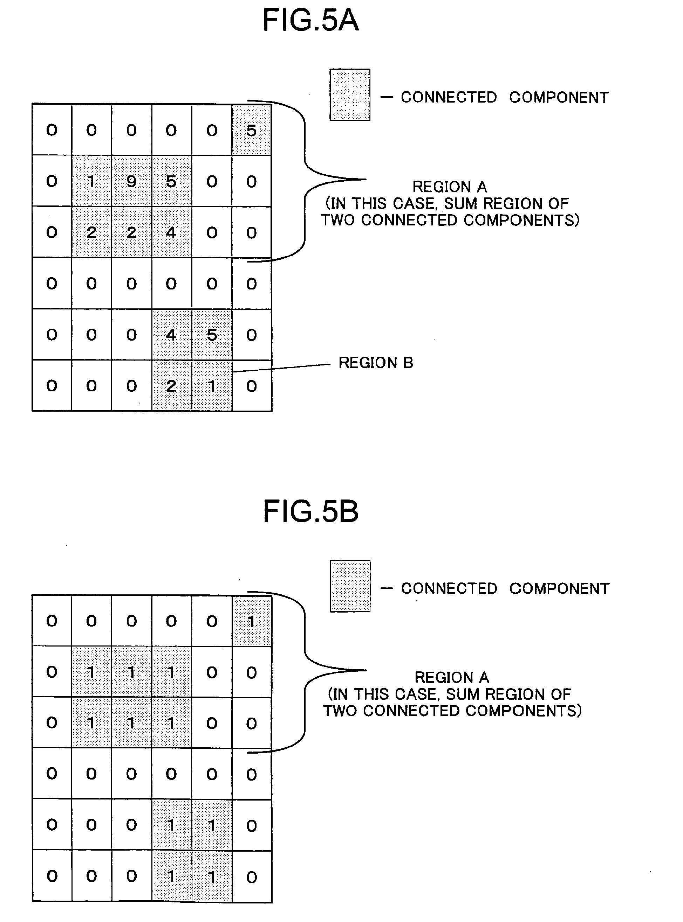

FIG. 5A illustrates an example of calculating the cumulative pixel value ratio when regions A and B are given in a usual gray-scale image.

FIG. 5B illustrates an example of calculating the cumulative pixel value ratio when regions A and B are given in a binary image.

Here, suppose that the following equation hold.

$$cumulative\ pixel\ value\ ratio = \frac{\iint_{region\,A} f(x,y)dxdy}{\iint_{region\,B} f(x,y)dxdy}$$

Then, regarding multiple pixel values (the case of FIG. 5A), the cumulative pixel value ratio = (sum of pixel values in the region A) / (sum of pixel values in the region B) = 28/12 holds, and regarding binary pixel values (the case of FIG. 5B), (because a sum of pixel values indicates area), the cumulative pixel value ratio = (sum of areas of the region A) / (sum of areas of the region B) = 7/4 holds.

In this embodiment, the cumulative pixel value ratio that is approximation of an affine invariant is calculated from both the registering image and the retrieving image, and the feature vector is generated so that the cumulative pixel value ratio becomes components thereof. In this embodiment, it is determined whether or not these feature vectors match. Therefore, in the embodiment, even if deformation which can be described by affine transformation occurs between the registering image and the retrieving image, image matching with high precision can be performed. In particular, although recognition with high precision cannot be performed in the related art using a feature point triangle area ratio, recognition with high precision can be performed by using a cumulative pixel value ratio in the embodiment.

Next, a second embodiment of the invention is described in detail with reference to drawings.

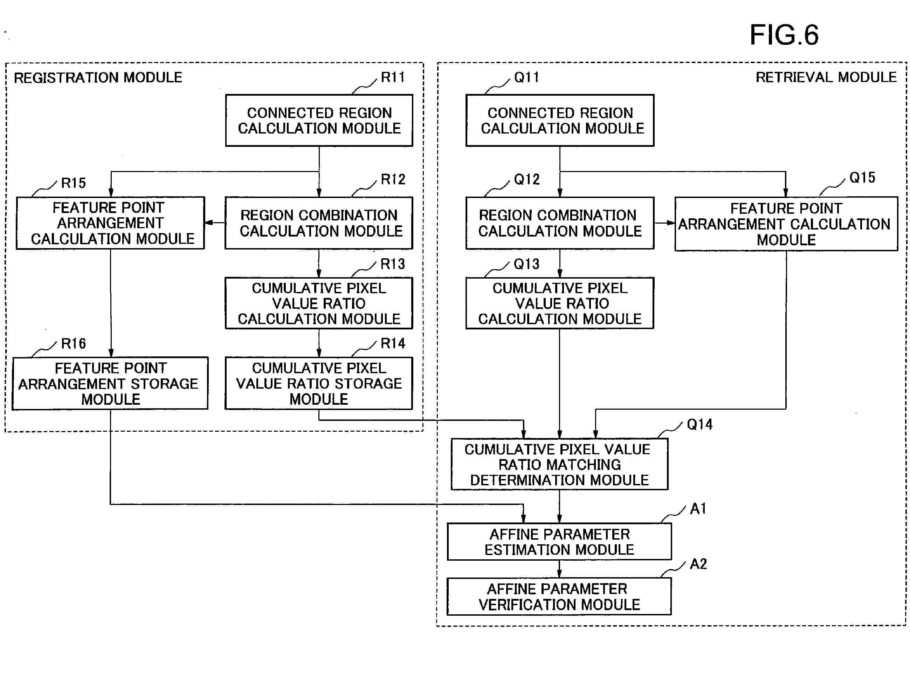

Referring to FIG. 6, the second embodiment of the invention includes a feature point arrangement calculation module R15 in the registration module, a feature point arrangement storage module R16 in the registration module, a feature point arrangement calculation module Q15 in the retrieval module, an affine parameter estimation unit A1, and an affine parameter verification unit A2, in addition to components of the first embodiment.

The feature point arrangement calculation module R15 in the registration module calculates a feature point arrangement with respect to row Lm of a registering image connected region calculated by the region combination calculation module R12 in the registration module. For example, suppose Lm = (i1, i2, ..., im), wherein i1 is the number uniquely specifying the corresponding connected region. Then, the feature point arrangement calculation module R15 in the registration module calculates the following feature point arrangement Fm,

$$(x_{i1}, y_{i1}, x_{i2}, y_{i2}, \cdots, x_{im}, y_{im})$$

The feature point arrangement storage module R16 in the registration module stores the feature point arrangement Fm calculated by the feature point arrangement calculation module R15 in the registration module together with an index which can uniquely specify a region combination Lm from which the feature point arrangement Fm is calculated.
The feature point arrangement calculation module Q15 in the retrieval module calculates a feature point arrangement with respect to row LmB of connected regions calculated by the region combination calculation module Q12 in the retrieval module, like the feature point arrangement calculation module R15 in the registration module. The calculated feature point arrangement FmB is represented as
$$(x'_{i1}, y'_{i1}, x'_{i2}, y'_{i2}, \cdots, x'_{im}, y'_{im})$$

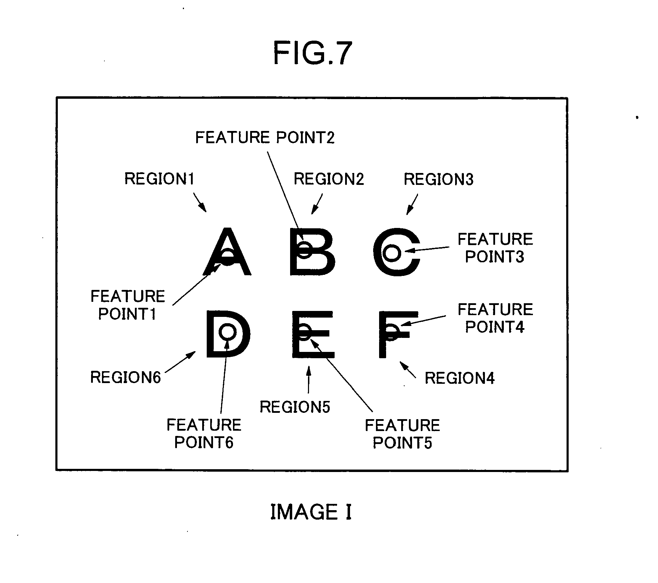

FIG. 7 is a figure illustrating regions and feature points calculated therefrom. In the embodiment, it is described that a center of gravity is calculated from one (connected) region as a feature point. However, the center of gravity is not necessarily calculated. One feature point is not necessarily extracted from one region. If a method exists, in which the number of feature points calculated from the registering image is the same as the number of feature points calculated from the retrieving image, the method is applicable.
The affine parameter estimation unit A1 obtains one of feature point arrangements stored in the feature point arrangement storage module R16 in the registration module, and calculates an affine parameter from the feature point arrangement and the one of feature point arrangements calculated from the feature point arrangement calculation module Q15 in the retrieval module. The affine parameter estimation unit A1 uses, for example, the following method in order to calculate the affine parameter.
A coordinate value of a point k in the registering image is represented as $(x_k, y_k)$ and a coordinate value of a point k in the retrieving image is represented as $(x_k', y_k')$. Therefore, if a feature point arrangement $(x_{i1}, y_{i1}, x_{i2}, y_{i2}, \cdots, x_{im}, y_{im})$ and a feature point arrangement $(x'_{i1}, y'_{i1}, x'_{i2}, y'_{i2}, \cdots, x'_{im}, y'_{im})$ are corresponding arrangements, a relation between the both arrangements is represented by using affine parameters a, b, c, d, e and f, as the following equation:

$$\begin{pmatrix} x_{ik}' \\ y_{ik}' \end{pmatrix} = \begin{pmatrix} a & b \\ c & d \end{pmatrix} \begin{pmatrix} x_{ik} \\ y_{ik} \end{pmatrix} + \begin{pmatrix} e \\ f \end{pmatrix} \qquad (1 \le k \le m)$$

The equation can be represented as $\alpha = X\beta$ by using

$$\alpha = \begin{pmatrix} x_1' \\ y_1' \\ x_2' \\ y_2' \\ \cdots \\ x_m' \\ y_m' \end{pmatrix}, \quad X = \begin{pmatrix} x_1 & y_1 & 0 & 0 & 1 & 0 \\ 0 & 0 & x_1 & y_1 & 0 & 1 \\ x_2 & y_2 & 0 & 0 & 1 & 0 \\ 0 & 0 & x_2 & y_2 & 0 & 1 \\ & & \cdots & & & \\ x_m & y_m & 0 & 0 & 1 & 0 \\ 0 & 0 & x_m & y_m & 0 & 1 \end{pmatrix} \quad \text{and} \quad \beta = \begin{pmatrix} a \\ b \\ c \\ d \\ e \\ f \end{pmatrix}.$$

Then, the question of estimating the affine parameter becomes the question of estimating $\beta$.

The estimate value of β,
**[0092]** that is,

$$\hat{\beta} = \begin{pmatrix} \hat{a} \\ \hat{b} \\ \hat{c} \\ \hat{d} \\ \hat{e} \\ \hat{f} \end{pmatrix}$$

can be calculated by the equation
$\hat{\beta} = (X^T X)^{-1} X^T \alpha$ using the least-squares method.
The affine parameter verification unit A2 determines that the feature point arrangements match if values of estimated affine parameters $\hat{a}, \hat{b}, \hat{c}, \hat{d}, \hat{e}, \hat{f}$ or values to be calculated from the estimated affine parameters $\hat{a}, \hat{b}, \hat{c}, \hat{d}, \hat{e}, \hat{f}$ are values within predetermined ranges. Now, suppose the model:

$$\begin{pmatrix} x_{ik}' \\ y_{ik}' \end{pmatrix} = \begin{pmatrix} a & b \\ c & d \end{pmatrix}\begin{pmatrix} x_{ik} \\ y_{ik} \end{pmatrix} + \begin{pmatrix} e \\ f \end{pmatrix} = \begin{pmatrix} B_x & 0 \\ 0 & B_y \end{pmatrix}\begin{pmatrix} \cos\theta & -\sin\theta \\ \sin\theta & \cos\theta \end{pmatrix}\begin{pmatrix} x_{ik} \\ y_{ik} \end{pmatrix} + \begin{pmatrix} e \\ f \end{pmatrix},$$

wherein $B_x$ is a scaling factor for the x direction, $B_y$ is a scaling factor for the y direction, and $\theta$ is an angle of rotation. In this case, when ranges of the values $B_x$, $B_y$, and $\theta$ are determined based on conditions of an imaging system, ranges of the values a, b, c, d are determined. Therefore, the affine parameter verification unit A2 verifies whether or not the values $\hat{a}, \hat{b}, \hat{c}, \hat{d}$ lie within the ranges, and may determine that the feature point arrangements match when determining that the feature point arrangements fit well each other.
The affine parameter verification unit A2 may verify not only whether or not the values $\hat{a}, \hat{b}, \hat{c}, \hat{d}, \hat{e}, \hat{f}$ lie within the predetermined ranges, but also whether or not values calculated from $\hat{a}, \hat{b}, \hat{c}, \hat{d}, \hat{e}, \hat{f}$ lie within ranges determined based on conditions reasonably assumed. The affine parameter verification unit A2 may compare the calculated $\hat{x}_{ik}'$, $\hat{y}_{ik}'$

with $x_{ik}'$, $y_{ik}'$ by using values $\begin{pmatrix} \hat{x}_{ik}' \\ \hat{y}_{ik}' \end{pmatrix} = \begin{pmatrix} \hat{a} & \hat{b} \\ \hat{c} & \hat{d} \end{pmatrix}\begin{pmatrix} x_{ik} \\ y_{ik} \end{pmatrix} + \begin{pmatrix} \hat{e} \\ \hat{f} \end{pmatrix}$ calculated for each k. In order to perform the processes, the affine parameter verification unit A2 may operate as follows. The affine parameter verification unit A2 regards the feature point arrangements $(x_{i1}', y_{i1}', x_{i2}', y_{i2}', \cdots, x_{im}', y_{im}')$ and $(\hat{x}_{i1}', \hat{y}_{i1}', \hat{x}_{i2}', \hat{y}_{i2}', \cdots, \hat{x}_{im}', \hat{y}_{im}')$

as vectors. The affine parameter verification unit A2 calculates degree of discrepancy (or degree of similarity) between the vectors by using a city-block distance, a sum of squared errors, a Euclidean distance, an angle between two vectors, an inner product of two vectors, or the like. The affine parameter verification unit A2 may determine that the feature point arrangements match, when the degree of discrepancy is smaller (or degree of similarity is larger) than a given threshold value.
The degree of discrepancy between the vectors can be a value given as a sum of city-block distances calculated for each k, like a value $\sum_{k=1}^{m} \{(\hat{x}_{ik}' - x_{ik}') + (\hat{y}_{ik}' - y_{ik}')\}$.

More generally, the affine parameter verification unit A2 may determine that the feature point arrangements match, when a value of function, of which degree of discrepancy (or degree of similarity) of something calculated for each k is an argument, is smaller (or larger) than a given threshold value.
The affine parameter verification unit A2 may perform matching using degree of discrepancy (or degree of similarity) calculated by a cumulative pixel value ratio matching determination module Q4 in the retrieval module and these values.

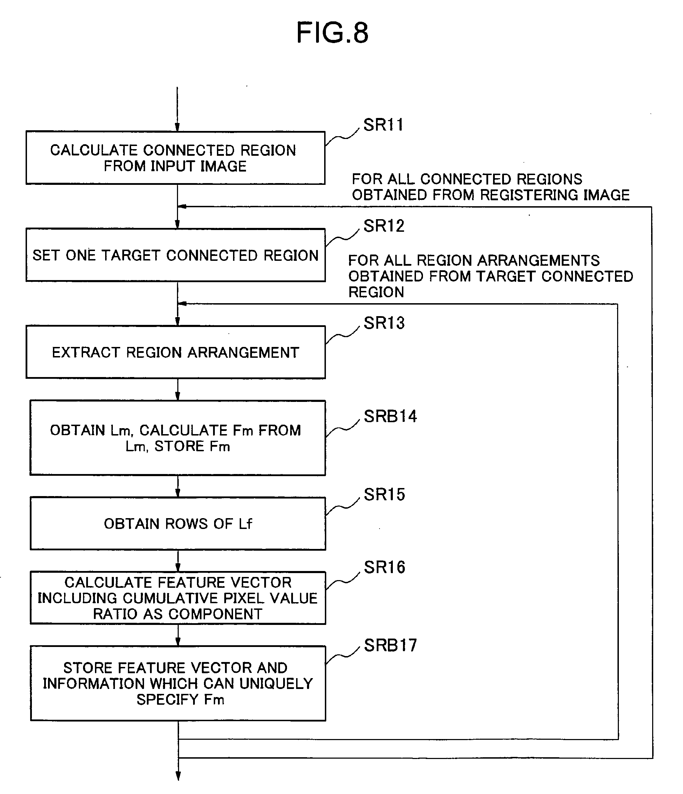

Next, referring to flowcharts in FIG. 8, FIG. 9 and FIG. 10, whole operations of the second embodiment are described in detail.

The whole operations include the registering process and the retrieving process. A CPU of the image matching device may perform these processes.

Initially, the registering process is described. The registering process in the second embodiment of the invention is almost similar to the registering process of the first embodiment of the invention. Therefore, processes which are different from the first embodiment of the invention, that is, steps SRB14 and SRB17 in FIG. 8 are described.

In the step SRB14, after the process in the step SR14 in the first embodiment of the invention is performed, the feature point arrangement calculation module R15 in the registration module calculates the feature point arrangement Fm from Lm. The calculated Fm is stored in the feature point arrangement storage module R16 in the registration module.

In the step SRB17, after the process of the step SR17 in the first embodiment of the invention is performed, information which can uniquely specify Lm from which the feature vector is calculated is also stored.

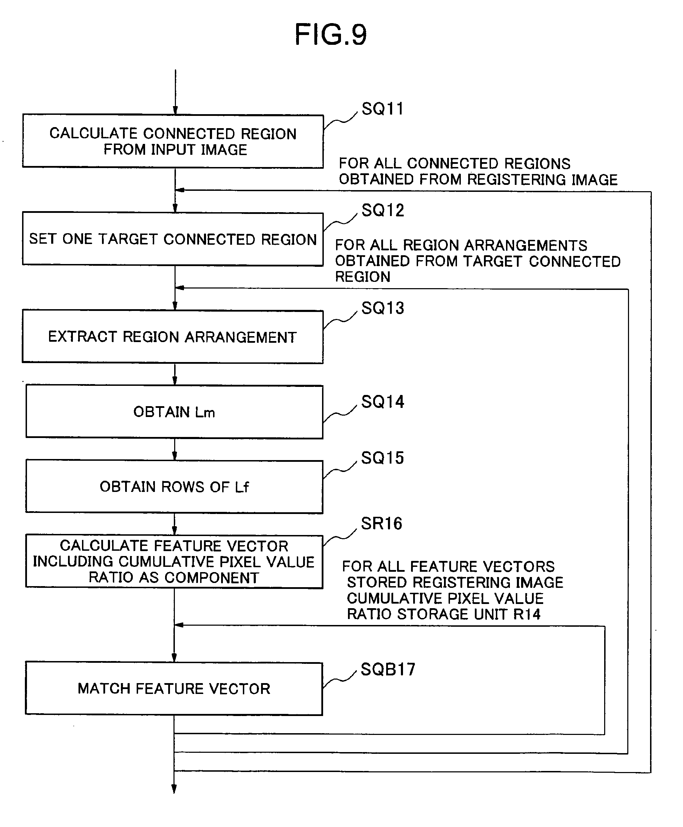

Next, the retrieving process is described. The retrieving process in the second embodiment of the invention is almost similar to the retrieving process of the first embodiment of the invention. Therefore, a process which is different from the first embodiment of the invention, that is, a step SQB 17 in FIG. 9 is described.

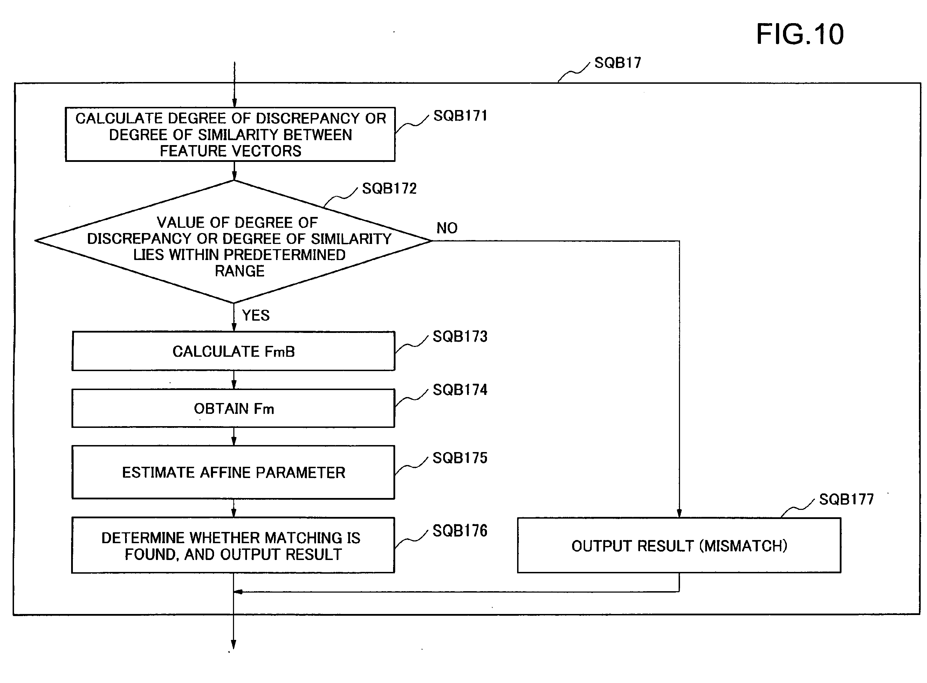

A process of the step SQB 17 is described by using FIG. 10.

Initially, in a step SQB171, the cumulative pixel value ratio matching determination module Q14 in the retrieval module calculates degree of similarity between a feature vector calculated from a registering image and a feature vector calculated from a retrieving image.

In a step SQB172, the cumulative pixel value ratio matching determination module Q 14 in the retrieval module determines whether or not the degree of discrepancy (degree of similarity) calculated in the step SQB171 lies within a predetermined range. In this case, there is a method that the range is predetermined so that the cumulative pixel value ratio matching determination module Q 14 in the retrieval module can determine that they are matched if the degree of discrepancy (degree of similarity) is smaller (larger) than a given value. If the degree of discrepancy (degree of similarity) lies within a predetermined range, a step SQB173 is performed, and a step SQB177 is performed, if not.

In the step SQB173, the feature point arrangement calculation module Q15 in the retrieval module calculates a feature point arrangement FmB.

In a step SQB174, the affine parameter estimation unit A1 obtains the feature point arrangement Fm calculated from the region combination Lm from which the feature vector calculated from the registering image on which matching is currently performed is generated.

In a step SQB175, the affine parameter verification unit A2 estimates an affine parameter from Fm and FmB.

In a step SQB176, the affine parameter verification unit A2 determines on whether or not match is finally found, and outputs the result.

In a step SQB177, the cumulative pixel value ratio matching determination module Q14 in the retrieval module outputs mismatch as a final result.

Next, the effect of the second embodiment of the invention is described.

The second embodiment of the invention includes following configuration in addition to matching of feature vectors including a cumulative pixel value ratio as a component. That is, in the embodiment, the feature point arrangement is calculated from a region combination from which the feature vector is calculated, and matching can be performed using the feature point arrangement. Therefore, the embodiment enables matching with high precision.

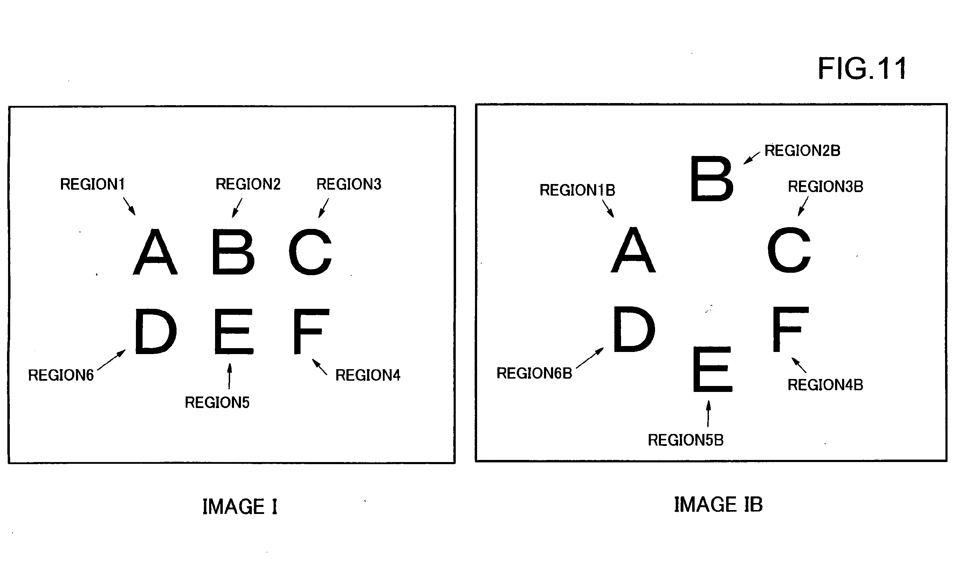

In particular, suppose that an image I is given as the registering image and an image IB is given as the retrieving image as shown in FIG. 11, and suppose regarding a region combination from which a feature vector is calculated, each of regions in the combination are shifted and given (corresponding to an example of m = 6). In this case, the feature vectors, component of which is a cumulative pixel value ratio, have the same values in the registering image I and in the retrieving image IB. Therefore, it is determined that the feature vectors match. However, it is natural to consider that the images do not match. The reason why such an error occurs is because only values calculated from information on areas of respective regions are used as the feature vectors.

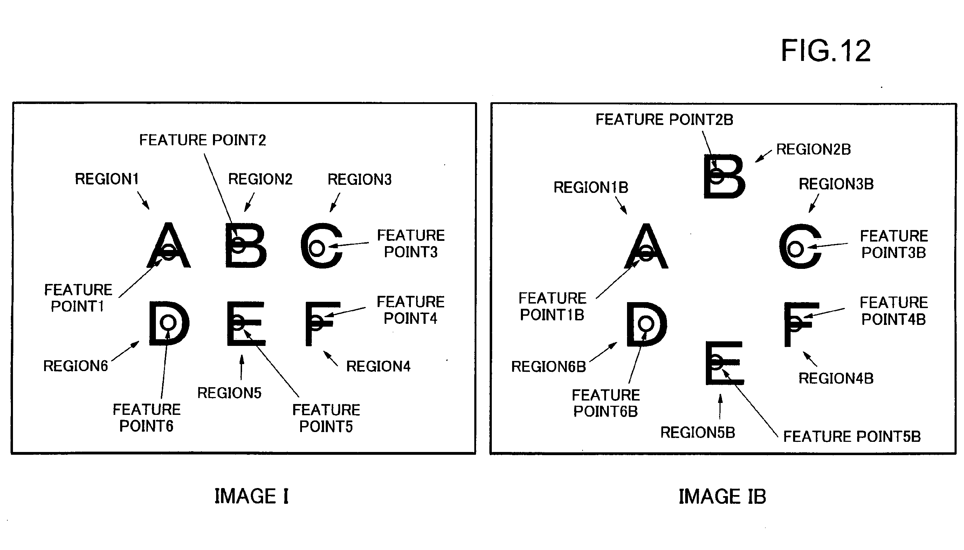

In the second embodiment of the invention, because not only areas but also the feature points extracted from both the image I and the image IB shown in FIG. 12 are used, information on locations of regions can be used for matching. Therefore, the second embodiment of the invention enables matching with high precision even in the case shown in FIG. 11.

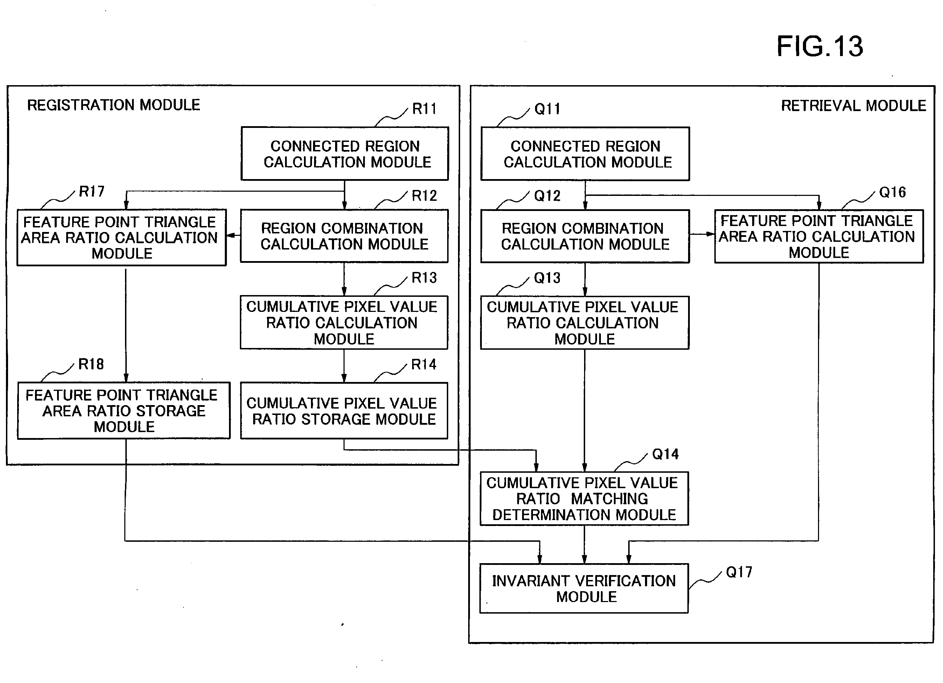

Next, a third embodiment of the invention is described in detail with reference to drawings. Referring to FIG. 13, a third embodiment of the invention includes a triangle area ratio calculation module R17 in the registration module, a triangle area ratio storage module R18 in the registration module, a feature point triangle area ratio calculation module Q16 in the retrieval module, and an invariant verification unit Q17 in addition to the configuration of the first embodiment of the invention.

The triangle area ratio calculation module R17 in the registration module calculates a row of invariants from rows Lf of feature points calculated from the registering image by using the same procedure as the registration procedure G in the background art.

The triangle area ratio storage module R18 in the registration module stores the row of invariants calculated in the triangle area ratio calculation module R15 in the registration module together with an index which can uniquely specify the row Lm of connected regions from which an image number and a row of invariants are calculated.

The feature point triangle area ratio calculation module Q16 in the retrieval module calculates a row of invariants from the rows Lf of feature points calculated from the retrieval image by using the same procedure as the registration procedure G in the background art.

The invariant verification unit Q 17 regards the row of invariants calculated in the triangle area ratio calculation module R15 in the registration module and the row of invariants calculated in the feature point triangle area ratio calculation module Q16 in the retrieval module as the feature vectors. The invariant verification unit Q17 calculates degree of discrepancy (or degree of similarity) which is described in descriptions on the function of the cumulative pixel value ratio calculation module Q14 in the retrieval module. The invariant verification unit Q17 determines whether or not the rows of invariants match, using the value. When degree of discrepancy (or degree of similarity) calculated in the invariant verification unit Q17 lies within a predetermined range, the invariant verification unit Q17 may determine that match is found. When the degree of discrepancy (or degree of similarity) lies outside the range, the invariant verification unit Q17 may determine that match is not found. The invariant verification unit Q17 can also use degree of discrepancy (or degree of similarity) calculated in the cumulative pixel value ratio matching determination module Q14 in the retrieval module for matching.

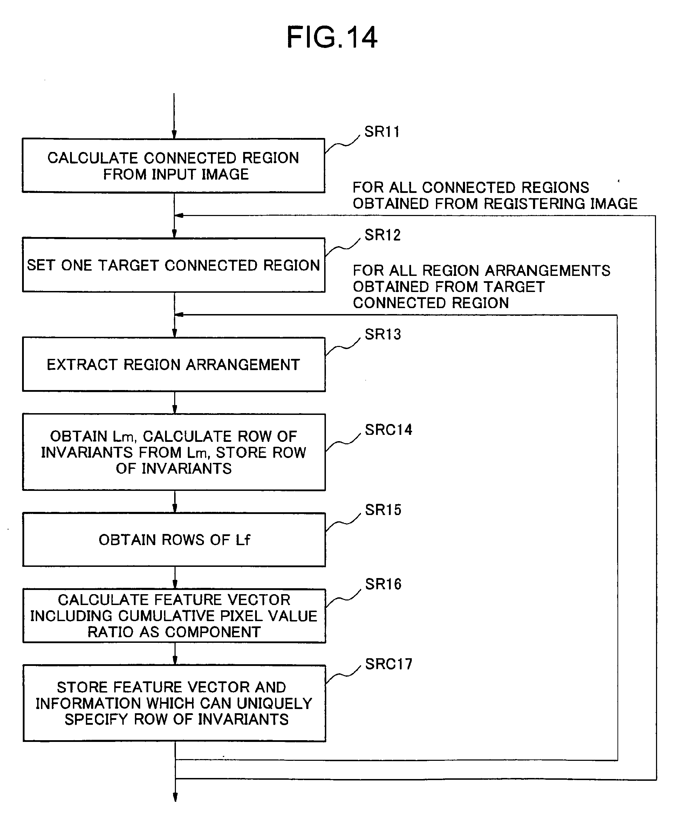

Next, referring to flowcharts in FIG. 14, FIG. 15 and FIG. 16, whole operations of the third embodiment are described in detail.

All the operations include the registering process and the retrieving process. A CPU of the image matching device may perform these processes.

Initially, the registering process is described. The registering process in the third embodiment of the invention is almost similar to the registering process of the first embodiment of the invention. Therefore, processes which are different from the first embodiment of the invention, that is, steps SRC14 and SRC17 in FIG. 14 are described.

In the step SRC14, after the process in the step SR14 in the first embodiment of the invention is performed, the feature point arrangement calculation module R15 in the registration module calculates a row of invariants from Lm. The calculated row of invariants is stored in the triangle area ratio storage module R18 in the registration module.

In the step SRC17, after the process of the step SR17 in the first embodiment of the invention is performed, information, which can uniquely specify the row of invariants calculated from Lm from which the feature vector is calculated, is also stored.

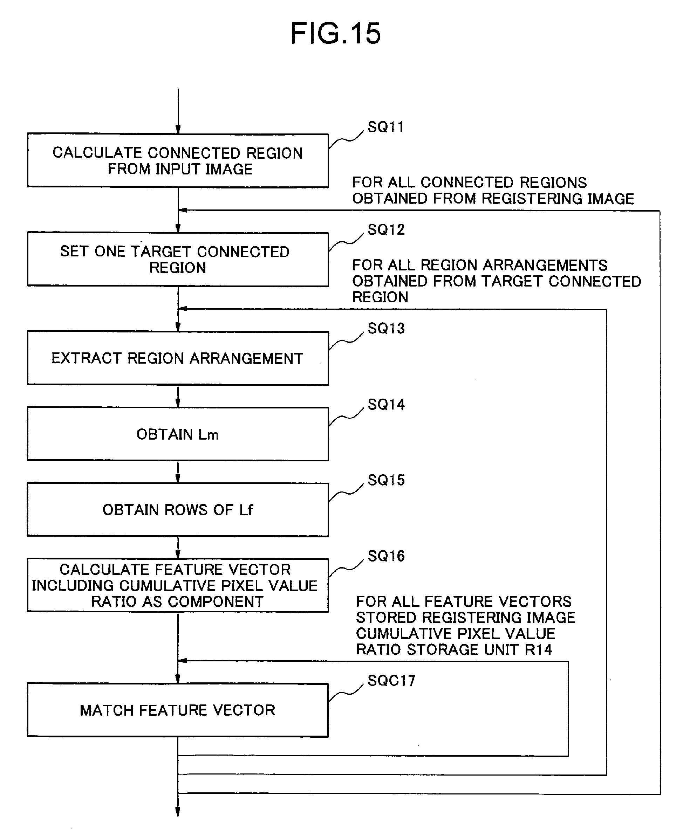

Next, the retrieving process is described. The retrieving process in the third embodiment of the invention is almost similar to the retrieving process of the first embodiment of the invention. Therefore, a process which is different from the first embodiment of the invention, that is, a step SQC17 in FIG. 15 is described.

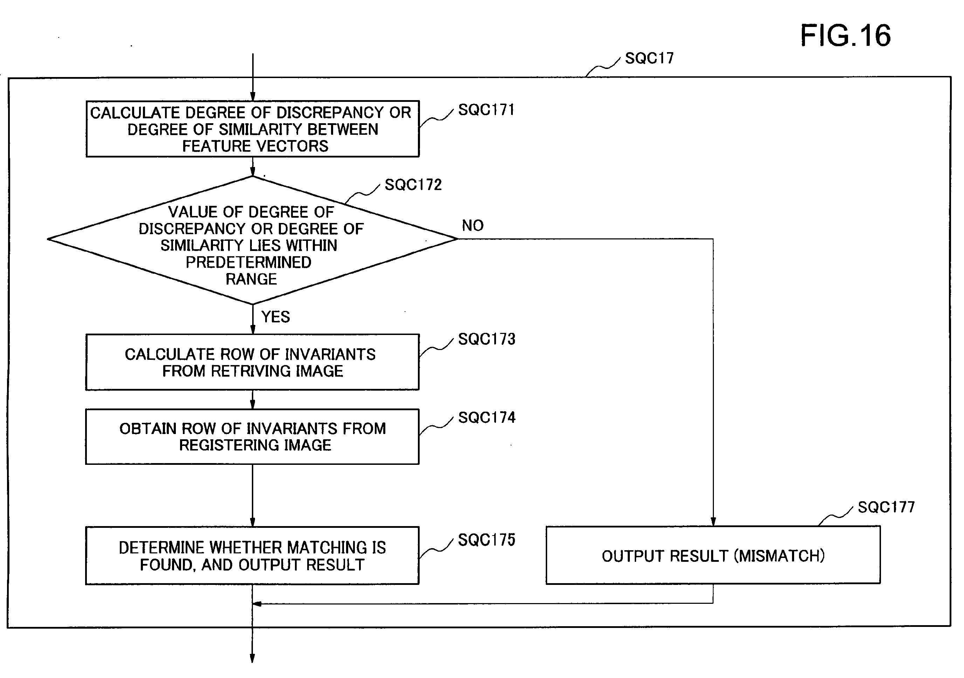

A process of the step SQC 17 is described by referring to FIG. 16.

A step SQC 171 has the same process as the step SQB 171.

In a step SQC172, the cumulative pixel value ratio matching determination module Q14 in the retrieval module determines whether or not degree of discrepancy (degree of similarity) calculated in the step SQC171 lies within a predetermined range. In this case, there is a method that the range is predetermined so that the cumulative pixel value ratio matching determination module Q 14 in the retrieval module can determine that they are matched if the degree of discrepancy (degree of similarity) is smaller (larger) than a given value. If the degree of discrepancy (degree of similarity) lies within the predetermined range, a step SQC173 is performed, and a step SQC177 is performed if not.

In a step SQC173, the feature point triangle area ratio calculation module Q16 in the retrieval module calculates a row of invariants. The above described technique may be used for the process. In above descriptions on techniques, a center of gravity is calculated from one (connected) region as a feature point. However, the center of gravity is not necessarily calculated. It is not necessarily required that one feature point is extracted from one region. If a method in which the number of feature points calculated from the registering image is equal to the number of feature points calculated from the retrieving image is obtained, the method is applicable.

In a step SQC174, invariant verification unit Q17 obtains a row of invariants calculated from the region combination Lm from which the feature vector, calculated from the registering image on which matching is currently performed, is generated.

In a step SQC175, the invariant verification unit Q17 outputs a result on whether or not match is found.

In a step SQC 177, the invariant verification unit Q 17 outputs whether or not match is found, as a final result.

Next, the effect of the third embodiment of the invention is described.

The third embodiment of the invention includes following configurations in addition to matching of feature vectors including a cumulative pixel value ratio as a component. That is, in the embodiment, the feature point arrangement is calculated from a region combination from which the feature vector is calculated, and matching can be performed by using the row of invariants in which the feature point triangle area ratio is calculated from the feature point arrangement as the invariant.

In the third embodiment of the invention, not only areas but also information on locations of the regions can be used for matching like the second embodiment of the invention. Therefore, the third embodiment of the invention enables matching with high precision.

The estimation and verification of the affine parameter in the second embodiment and the verification based on the invariant in the third embodiment are processes, each of which is independently applicable. Therefore, if both the estimation and verification of the affine parameter and the verification based on the invariant are applied to the first embodiment, a new embodiment may be configured.

Descriptions on a case in which an input image is a gray-scale image (including a binary) are disclosed above. When the input image is a color image, the embodiments of the invention may be configured to form one gray-scale image from the color image by using a procedure in which a gray value is calculated from a point on a color space, for each pixel in the image.

In the embodiments of the invention, a plurality of gray-scale images is made of a color image by using an existing method, and matching may be performed using these images.

For example, in the embodiments of the invention, a following technique is available.

Initially, in the cumulative pixel value ratio calculation module R13 in the registration module, the cumulative pixel value ratio calculation module Q 13 in the retrieval module, the feature point arrangement calculation module R15 in the registration module, the feature point arrangement calculation module Q 15 in the retrieval module, the triangle area ratio calculation module R17 in the registration module, and the feature point triangle area ratio calculation module Q 15 in the retrieval module, calculation is performed from each gray-scale image.

In the cumulative pixel value ratio storage module R14 in the registration module, the feature point arrangement storage module R16 in the registration module, and the triangle area ratio storage module R18 in the registration module, values calculated from a plurality of images are stored.

In the embodiments of the invention, when functions of the cumulative pixel value ratio calculation Q14 in the retrieval module, the affine parameter estimation unit A1, the affine parameter verification unit A2, and the invariant verification unit Q17 are operated more than once, matching in the plurality of images makes possible with respect to the same region combination.

For example, in the embodiments of the invention, if a gray-scale image R represented by a R value, a gray-scale image G represented by a G value and a gray-scale image B represented by a B value in a RGB space are used, matching between feature vectors calculated from the gray-scale image R, matching between feature vectors calculated from the gray-scale image G, and matching between feature vectors calculated from the gray-scale image B can be performed. In the embodiments of the invention, when feature vectors calculated in all gray-scale images match, it is determined that match is finally found as a matching result. In the embodiments of the invention, when feature vectors calculated in a predetermined number or more of gray-scale images match, it may be determined that match is finally found. When the predetermined number above described is two (2), it may be determined that match is finally found if the feature vectors in the gray-scale image R match and the feature vectors in the gray-scale image B match in the embodiment of the invention. Here, although the gray-scale images represented by each RGB component are exemplified as a method for generating gray-scale images from the color space, other methods are available.

In the embodiments of the invention, when an input image is a color image, gray-scale images on components in the existing color spaces, like a RGB space, a XYZ space, a LAB space, a LUV space, a YIQ space, are available as a method for generating gray-scale images. In the embodiment of the invention, if a plurality of functions for changing a set of pixel values in the color space into a one-dimensional gray value are provided, a plurality of gray-scale images can be obtained.

The plurality of gray-scale images may be calculated at the time of image inputting, or may be calculated just before a feature vector or a row of invariant lists is calculated.

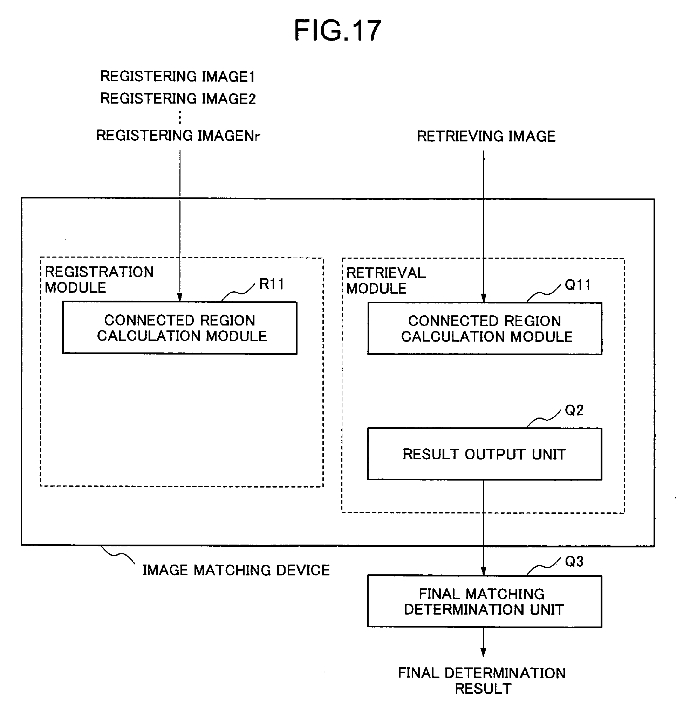

Next, operations of the embodiment of the invention are described by using specific examples. As shown in FIG. 17, a first example includes a final matching determination unit Q3 in addition to the image matching device of the first, second or third embodiment of the invention. A result output unit Q2 in FIG. 17 corresponds to the cumulative pixel value ratio matching determination module Q 14 in the retrieval module in the image matching device of the first embodiment of the invention. The result output unit Q2 in FIG. 17 corresponds to the affine parameter verification unit A2 in the image matching device of the second embodiment of the invention. The result output unit Q2 in FIG. 17 corresponds to the invariant verification unit Q17 in the image matching device of the third embodiment of the invention. These output match or mismatch once in common with respect to a pair of a combination of regions calculated from the registering image and a combination of regions calculated from the retrieving image.

The final matching determination unit Q3 separately counts the number of matches outputted from the result output unit Q2 for each registering image. For example, the final matching determination unit Q3 increments the number of matches Cr by one, when a combination of regions in the registering image Rlr matches a combination of regions in the retrieving image. If each Cr is initialized to be zero before matching starts, as a result, it can be calculated that the number of matches is Cr for the registering image Rlr. Next, the final matching determination unit Q3 determines the registering image corresponding to the retrieving image by using the value of Cr, and outputs information which can uniquely specify the registering image. The final matching determination unit Q3, for example, may use the registering image Rlr having the largest value of Cr. Otherwise, the final matching determination unit Q3 may calculate scores of respective images by using the equation described in the background art and may perform matching using the values. The final matching determination unit Q3 may abandon the result if the number of Cr or score is the same point. The final matching determination unit Q3 may abandon the result if the number of Cr is smaller than a predetermined value or if the score lies outside a predetermined range.

The final matching determination unit Q3 operates after matching determination between all the region combinations for all registering images and all region combination for the retrieving image are completed.

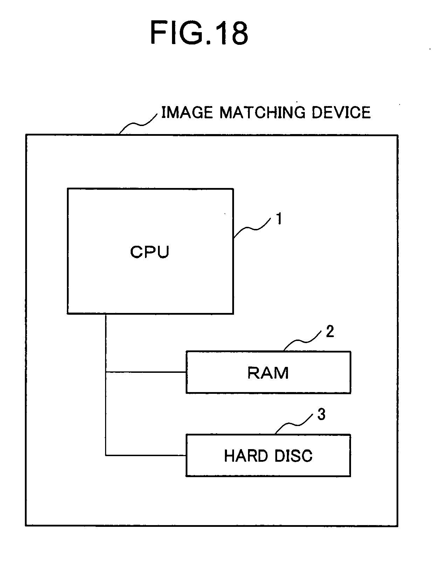

The image matching device may be configured by one computer as shown in FIG. 18. The configuration in which a program having the image matching function of the invention is installed in a memory (RAM 2) on the computer and is operated is described.

That is, the above embodiments are achieved when a computer program, which can perform the function of the flowchart to which is referred in the descriptions of the above image matching device, is provided, and the computer program is read and executed by the CPU 1 of the device.

The computer program supplied to the device, data including features, and image data may be stored in a storage medium like a readable/writable RAM 2, a hard disc 3 or the like. In this case, the respective embodiments of the invention are configured with codes of the computer program or a storage medium.

The image matching function of the invention may be configured with a computer as hardware. A part of the function may be configured with hardware, and the function may be performed by cooperative operations between the hardware and the software program. The registering image and the retrieving image may be stored in memory of a computer or the hard disc 3 as an image imaged by imaging means in advance, or may be obtained through a communication line from a different computer. More than one imaging devices as input devices and a communication line between the imaging device and the computer may be arranged.

The function of the invention may be separately arranged on a plurality of computers. For example, in the first example using the image matching device of the first embodiment, each computer may include following functions. A computer ComA may include the connected region calculation module R11 in the registration module, the region combination calculation module R12 in the registration module, and the cumulative pixel value ratio calculation module R13 in the registration module. A computer ComC may include a cumulative pixel value ratio storage module R14 in the registration module. A computer ComB may include the connected region calculation module Q11 in the retrieval module, the region combination calculation module Q12 in the retrieval module, the cumulative pixel value ratio calculation module Q 13 in the retrieval module, the cumulative pixel value ratio matching determination module Q14 in the retrieval module and the final matching determination unit Q3. In the first example using the image matching device of the second embodiment, each computer may include following functions.

The computer ComA may include the connected region calculation module R11 in the registration module, the region combination calculation module R12 in the registration module, the cumulative pixel value ratio calculation module R13 in the registration module, and the feature point arrangement calculation module R15 in the registration module. The computer ComC may include the cumulative pixel value ratio storage module R14 in the registration module and the feature point arrangement storage module R16 in the registration module. The ComB may include the connected region calculation module Q11 in the retrieval module, the region combination calculation module Q12 in the retrieval module, the cumulative pixel value ratio calculation module Q13 in the retrieval module, the cumulative pixel value ratio matching determination module Q 14 in the retrieval module, the feature point arrangement calculation module 15 in the retrieval module, an affine parameter estimation unit A1, an affine parameter verification unit A2 and the final matching determination unit Q3. In the first example using the image matching device of the third embodiment, each computer may include following functions. A computer ComA may include the connected region calculation module R11 in the registration module, the region combination calculation module R12 in the registration module, and the cumulative pixel value ratio calculation module R13 in the registration module and the triangle area ratio calculation module R17 in the registration module. The computer ComC may include the cumulative pixel value ratio storage module R14 in the registration module and the triangle area ratio storage module R18 in the registration module. The ComB may include the connected region calculation module Q11 in the retrieval module, the region combination calculation module Q12 in the retrieval module, the cumulative pixel value ratio calculation module Q 13 in the retrieval module, the cumulative pixel value ratio matching determination module Q14 in the retrieval module, the feature point triangle area ratio calculation module Q16 in the retrieval module, the invariant verification unit Q 17 and the final matching determination unit Q3.

In the above configuration, for example, following operations are possible.

Initially, the registering image is imaged by an imaging device ScA.

The imaged registering image is calculated by the computer ComA, and the calculated data is stored in the computer ComC.

Next, the retrieving image is imaged by an imaging device ScB, and the imaged retrieving image is calculated by the computer ComB.

Finally, the computer ComB performs image matching by comparing the calculated retrieving image with the data stored in the computer ComC.

In the example, the computer for the registering process, the computer for the retrieving process, and the computer for the storage are configured with one computer, respectively. However, each of the computers may be configured with a plurality of computers. A storage device does not need to be a computer, and may include a function for storing data, like a hard disc, CD (Compact Disk), DVD (Digital Versatile Disc), and flash memory and the like. A computer performing the registering process and the retrieving process is available. The computer for the registering process does not need to connect to the computer for the retrieving process. Data copy may be performed through a storage medium storing information including feature amount data, in order to use data calculated in one computer in different computer.

The invention is described above in detail. The descriptions are only examples of the invention. Even though different configuration and operations are found, devices, methods and programs which perform matching substantially similar to the invention are within the scope of the invention.

The application claims priority from Japanese Patent Application No. 2008-053925, filed March 4, 2008, the contents of which are incorporation herein by reference their entirety.

INDUSTRIAL APPLICABILITY

Each of the embodiments of the invention is applicable to usages, for example, general images, in particular, an image matching device for a document image, or a program for image matching. Each of the embodiments of the invention is also applicable to application of an image matching device configured to set a feature region as an input image to retrieve a document. Each of the embodiments of the invention is applicable to usages, for example, image retrieving in which images of strings of characters in a mail image like an address, and retrieving an image having in advance an identifier designed for image retrieving in advance.

BRIEF DESCRIPTION OF THE DRAWINGS

FIG. 1 illustrates a module configuration in a first embodiment of the invention.
FIG. 2 is a flowchart showing registering process in the first embodiment of the invention.
FIG. 3 illustrates an example of a region and a cumulative pixel value thereof.
FIG. 4 is a flowchart showing a retrieving process in the first embodiment of the invention.
FIG. 5A illustrates an example of calculation of a cumulative pixel value ratio.
FIG. 5B illustrates an example of calculation of a cumulative pixel value ratio.
FIG. 6 illustrates a module configuration in a second embodiment of the invention.
FIG. 7 illustrates an example of a region and a feature point calculated therefrom.
FIG. 8 is a flowchart showing a registering process in the second embodiment of the invention.
FIG. 9 is a flowchart showing a retrieving process in the second embodiment of the invention.
FIG. 10 is a flowchart showing a process of a step SQB17 in the retrieving process in the second embodiment of the invention.
FIG. 11 illustrates an example of the registering image and the retrieving image showing a particular effect in the second embodiment of the invention.
FIG. 12 illustrates an example of a region and a feature point calculated therefrom regarding the two image.
FIG. 13 illustrates a module configuration in a third embodiment of the invention.
FIG. 14 is a flowchart showing a registering process in the third embodiment of the invention.
FIG. 15 is a flowchart showing a retrieving process in the second embodiment of the invention.
FIG. 16 is a flowchart showing a process of a step SQC17 in the retrieving process in the third embodiment of the invention.
FIG. 17 illustrates a configuration of a first example of the invention.
FIG. 18 illustrates a hardware source for performing the first embodiment of the invention.

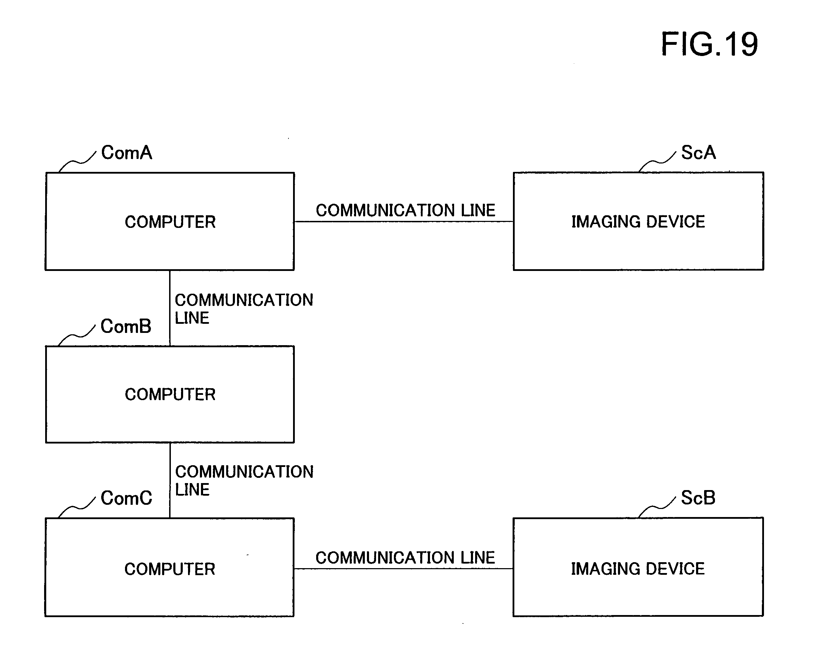

FIG. 19 illustrates an example in which the function of the invention is separately configured on a plurality of computers.

**Claims**

1. An image matching device that obtains a plurality of partial regions as a set of regions from partial regions in a first image and a second image with respect to said first image and said second image that are matching objects, and that matches said first image and said second image by using a feature amount calculated from said set, said device comprising:

   cumulative pixel value ratio calculation means that calculates a cumulative pixel value that is a sum of pixel values in two partial regions belonging to said set as said feature amount, and that calculates a ratio of said calculated cumulative pixel value.

2. The image matching device of claim 1, wherein said cumulative pixel value ratio calculation means uses a binary as said pixel value when said cumulative pixel value is calculated.

3. The image matching device of claim 1, wherein said cumulative pixel value ratio calculation means uses a pixel value in a gray-scale image as said pixel value when said cumulative pixel value is calculated.

4. The image matching device of claim 1, wherein said cumulative pixel value ratio calculation means uses a value calculated based on pixel information on each pixel in a color image as said pixel value when said cumulative pixel value is calculated.

5. The image matching device of claim 1, further comprising:

   one or more means that calculates a pixel value based on pixel information representing said color information, wherein matching using said cumulative pixel value ratio calculation means is performed for each of one or more kinds of gray-scale images calculated from a color image, and it is determined that match is found as an image, if a result of image matching on a predetermined number of gray-scale images is determined to be matched.

6. The image matching device of claim 1, further comprising:

   feature point arrangement calculation means that calculates a feature point arrangement from said set of regions that is used to calculate said feature amount calculated by said cumulative pixel value ratio calculation means; affine parameter estimation means that estimates an affine parameter by using said feature point arrangement calculated by said feature point arrangement calculation means; and affine parameter verification means that verifies fitness of said feature point arrangement by using a value calculated by said affine parameter.

7. The image matching device of claim 6, wherein when it is determined that said feature amounts match based on matching using said feature amount calculated by said cumulative pixel value ratio calculation means, said affine parameter estimation means and said affine parameter verification means operate.

8. The image matching device of claim 1, further comprising:

   feature point triangle area ratio calculation means that calculates a feature point arrangement from said set of regions that is used to calculated said feature amount calculated by said cumulative pixel value ratio calculation means, and that calculates a set of invariants that is a feature point triangle area ratio from said feature point arrangement; and invariant verification means that performs verification using said invariant that is said feature point triangle area ratio calculated by said feature point triangle area ratio calculation means.

9. The image matching device of claim 8, wherein when it is determined that said feature amounts match based on matching using said feature amount calculated by said cumulative pixel value ratio calculation means, said invariant verification means operates.

10. The image matching device of any one of claims 1 to 9, further comprising:

   final matching determination means that outputs a result for retrieval or identification of a registering image corresponding to a retrieved image.

**11.** A feature amount storage memory medium for image matching for storing data including a feature amount calculated by said image matching device of any one of claims 1 to 10.

**12.** An image matching method for obtaining a plurality of partial regions as a set of partial regions from partial regions in a first image and a second image with respect to said first image and said second image that are matching objects, and matching said first image and said second image by using a feature amount calculated from said set, said method comprising: calculating a cumulative pixel value that is a sum of pixel values in two partial regions belonging to said set as said feature amount; and calculating a ratio of said calculated cumulative pixel value.

**13.** A program for causing a computer to obtain a plurality of partial regions as a set of partial regions from partial regions in a first image and a second image with respect to said first image and said second image that are matching objects, and to perform a process of matching said first image and said second image by using a feature amount calculated from said set, wherein said program causes said computer to calculate a cumulative pixel value that is a sum of pixel values in two partial regions belonging to said set as said feature amount and to calculate a ratio of said calculated cumulative pixel value to perform a cumulative pixel value ratio calculation process.

**14.** The program of claim 13, wherein a binary is used as said pixel value when said cumulative pixel value is calculated in said cumulative pixel value ratio calculation process.

**15.** The program of claim 13, wherein a pixel value in a gray-scale image is used as said pixel value when said cumulative pixel value is calculated in said cumulative pixel value ratio calculation process.

**16.** The program of claim 13, wherein a pixel value in a value calculated based on pixel information on each pixel in a color image as said pixel value is used as said pixel value when said cumulative pixel value is calculated in said cumulative pixel value ratio calculation process.

**17.** The program of claim 13, wherein a process for calculating a pixel value based on pixel information representing said color information is performed, matching using said cumulative pixel value ratio calculation process is performed for each of one or more kinds of gray-scale images calculated from a color image, and it is determined that match as an image is found, if a result of image matching on a predetermined number of gray-scale images is determined to be matched.

**18.** The program of claim 13, wherein said program causes said computer to perform a feature point arrangement calculation process for calculating a feature point arrangement from said set of regions that is used to calculate said feature amount calculated by said cumulative pixel value ratio calculation process, to perform affine parameter estimation process for estimating an affine parameter by using said feature point arrangement calculated by said feature point arrangement calculation process, and to perform affine parameter verification process for verifying fitness of said feature point arrangement by using a value calculated by said affine parameter.

**19.** The program of claim 18, wherein when it is determined that said feature amounts match based on matching using said feature amount calculated by said cumulative pixel value ratio calculation process, said affine parameter estimation process and said affine parameter verification process are performed.

**20.** The program of claim 13, wherein said program causes said computer to perform a feature point triangle area ratio calculation process for calculating a feature point arrangement from said set of regions that is used to calculated said feature amount calculated by said cumulative pixel value ratio calculation means, and for calculating a set of invariants that is a feature point triangle area ratio from said feature point arrangement, and to perform an invariant verification process for performing verification using said invariant that is said feature point triangle area ratio calculated by said feature point triangle area ratio calculation process.

**21.** The program of claim 20, wherein said program causes a computer to perform said invariant verification process when it is determined that said feature amounts match based on matching using said feature amount calculated by said cumulative pixel value ratio calculation process.

**22.** The program of any one of claims 13 to 21, said program causes a computer to perform a final matching determination process for outputting a result for retrieval or identification of a registering image corresponding to a retrieved image.

FIG.1

EP 2 251 830 A1

**REGISTRATION MODULE**

CONNECTED REGION
CALCULATION MODULE — R11

REGION COMBINATION
CALCULATION MODULE — R12

CUMULATIVE PIXEL VALUE RATIO
CALCULATION MODULE — R13

CUMULATIVE PIXEL VALUE RATIO
STORAGE MODULE — R14

**RETRIEVAL MODULE**

CONNECTED REGION
CALCULATION MODULE — Q11

REGION COMBINATION
CALCULATION MODULE — Q12

CUMULATIVE PIXEL VALUE RATIO
CALCULATION MODULE — Q13

CUMULATIVE PIXEL VALUE RATIO
MATCHING DETERMINATION MODULE — Q14

# FIG.2

CALCULATE CONNECTED REGION
FROM INPUT IMAGE — SR11

FOR ALL CONNECTED REGIONS OBTAINED
FROM REGISTERING IMAGE

SET ONE TARGET CONNECTED
REGION — SR12

FOR ALL REGION ARRANGEMENTS
OBTAINED FROM TARGET CONNECTED
REGION

EXTRACT REGION ARRANGEMENT — SR13

OBTAIN Lm — SR14

OBTAIN ROWS OF Lf — SR15

CALCULATE FEATURE VECTOR
INCLUDING CUMULATIVE PIXEL VALUE
RATIO AS COMPONENT — SR16

STORE FEATURE VECTOR — SR17

## FIG.3

IMAGE I

# FIG.4

```
                    │
                    ▼
┌──────────────────────────────┐  ⟋SQ11
│  CALCULATE CONNECTED REGION   │
│      FROM INPUT IMAGE         │      FOR ALL CONNECTED REGIONS OBTAINED
└──────────────────────────────┘      FROM REGISTERING IMAGE
                    │
                    ▼
┌──────────────────────────────┐  ⟋SQ12
│  SET ONE TARGET CONNECTED REGION │  FOR ALL REGION ARRANGEMENTS
└──────────────────────────────┘      OBTAINED FROM TARGET CONNECTED
                    │                  REGION
                    ▼
┌──────────────────────────────┐  ⟋SQ13
│   EXTRACT REGION ARRANGEMENT  │
└──────────────────────────────┘
                    │
                    ▼
┌──────────────────────────────┐  ⟋SQ14
│          OBTAIN Lm            │
└──────────────────────────────┘
                    │
                    ▼
┌──────────────────────────────┐  ⟋SQ15
│       OBTAIN ROWS OF Lf       │
└──────────────────────────────┘
                    │
                    ▼
┌──────────────────────────────┐  ⟋SQ16
│   CALCULATE FEATURE VECTOR    │      FOR ALL FEATURE VECTORS
│ INCLUDING CUMULATIVE PIXEL VALUE │   STORED REGISTERING IMAGE
│     RATIO AS COMPONENT        │      CUMULATIVE PIXEL VALUE RATIO
└──────────────────────────────┘          STORAGE UNIT R14
                    │
                    ▼
┌──────────────────────────────┐  ⟋SQ17
│      MATCH FEATURE VECTOR     │
└──────────────────────────────┘
                    │
                    ▼
```

# FIG.5A

| | | | | | |
|---|---|---|---|---|---|
| 0 | 0 | 0 | 0 | 0 | 5 |
| 0 | 1 | 9 | 5 | 0 | 0 |
| 0 | 2 | 2 | 4 | 0 | 0 |
| 0 | 0 | 0 | 0 | 0 | 0 |
| 0 | 0 | 0 | 4 | 5 | 0 |
| 0 | 0 | 0 | 2 | 1 | 0 |

— CONNECTED COMPONENT

REGION A
(IN THIS CASE, SUM REGION OF
TWO CONNECTED COMPONENTS)

REGION B

# FIG.5B

| | | | | | |
|---|---|---|---|---|---|
| 0 | 0 | 0 | 0 | 0 | 1 |
| 0 | 1 | 1 | 1 | 0 | 0 |
| 0 | 1 | 1 | 1 | 0 | 0 |
| 0 | 0 | 0 | 0 | 0 | 0 |
| 0 | 0 | 0 | 1 | 1 | 0 |
| 0 | 0 | 0 | 1 | 1 | 0 |

— CONNECTED COMPONENT

REGION A
(IN THIS CASE, SUM REGION OF
TWO CONNECTED COMPONENTS)

# FIG.6

REGISTRATION MODULE

- R11 CONNECTED REGION CALCULATION MODULE
- R15 FEATURE POINT ARRANGEMENT CALCULATION MODULE
- R12 REGION COMBINATION CALCULATION MODULE
- R13 CUMULATIVE PIXEL VALUE RATIO CALCULATION MODULE
- R16 FEATURE POINT ARRANGEMENT STORAGE MODULE
- R14 CUMULATIVE PIXEL VALUE RATIO STORAGE MODULE

RETRIEVAL MODULE

- Q11 CONNECTED REGION CALCULATION MODULE
- Q12 REGION COMBINATION CALCULATION MODULE
- Q15 FEATURE POINT ARRANGEMENT CALCULATION MODULE
- Q13 CUMULATIVE PIXEL VALUE RATIO CALCULATION MODULE
- Q14 CUMULATIVE PIXEL VALUE RATIO MATCHING DETERMINATION MODULE
- A1 AFFINE PARAMETER ESTIMATION MODULE
- A2 AFFINE PARAMETER VERIFICATION MODULE

EP 2 251 830 A1

# FIG.7

IMAGE I

EP 2 251 830 A1

# FIG.8

```
        │
        ▼
┌──────────────────────────┐   SR11
│  CALCULATE CONNECTED     │
│  REGION FROM INPUT IMAGE │
└──────────────────────────┘        FOR ALL CONNECTED REGIONS
        │                            OBTAINED FROM REGISTERING IMAGE
        ▼
┌──────────────────────────┐   SR12
│ SET ONE TARGET           │
│ CONNECTED REGION         │        FOR ALL REGION ARRANGEMENTS
└──────────────────────────┘        OBTAINED FROM TARGET CONNECTED
        │                            REGION
        ▼
┌──────────────────────────┐   SR13
│  EXTRACT REGION          │
│  ARRANGEMENT             │
└──────────────────────────┘
        │
        ▼
┌──────────────────────────┐   SRB14
│  OBTAIN Lm, CALCULATE    │
│  Fm FROM Lm, STORE Fm    │
└──────────────────────────┘
        │
        ▼
┌──────────────────────────┐   SR15
│  OBTAIN ROWS OF Lf       │
└──────────────────────────┘
        │
        ▼
┌──────────────────────────┐   SR16
│  CALCULATE FEATURE       │
│  VECTOR INCLUDING        │
│  CUMULATIVE PIXEL VALUE  │
│  RATIO AS COMPONENT      │
└──────────────────────────┘
        │
        ▼
┌──────────────────────────┐   SRB17
│  STORE FEATURE VECTOR    │
│  AND INFORMATION WHICH   │
│  CAN UNIQUELY SPECIFY Fm │
└──────────────────────────┘
        │
        ▼
```

25

# FIG.9

CALCULATE CONNECTED REGION FROM INPUT IMAGE — SQ11

FOR ALL CONNECTED REGIONS OBTAINED FROM REGISTERING IMAGE

SET ONE TARGET CONNECTED REGION — SQ12

FOR ALL REGION ARRANGEMENTS OBTAINED FROM TARGET CONNECTED REGION

EXTRACT REGION ARRANGEMENT — SQ13

OBTAIN Lm — SQ14

OBTAIN ROWS OF Lf — SQ15

CALCULATE FEATURE VECTOR INCLUDING CUMULATIVE PIXEL VALUE RATIO AS COMPONENT — SR16

FOR ALL FEATURE VECTORS STORED REGISTERING IMAGE CUMULATIVE PIXEL VALUE RATIO STORAGE UNIT R14

MATCH FEATURE VECTOR — SQB17

FIG.10

SQB17

CALCULATE DEGREE OF DISCREPANCY OR DEGREE OF SIMILARITY BETWEEN FEATURE VECTORS — SQB171

VALUE OF DEGREE OF DISCREPANCY OR DEGREE OF SIMILARITY LIES WITHIN PREDETERMINED RANGE — SQB172

NO

YES

CALCULATE FmB — SQB173

OBTAIN Fm — SQB174

ESTIMATE AFFINE PARAMETER — SQB175

DETERMINE WHETHER MATCHING IS FOUND, AND OUTPUT RESULT — SQB176

OUTPUT RESULT (MISMATCH) — SQB177

EP 2 251 830 A1

## FIG.11

IMAGE IB

IMAGE I

FIG.12

IMAGE I

IMAGE IB

EP 2 251 830 A1

FIG.13

REGISTRATION MODULE

CONNECTED REGION CALCULATION MODULE `R11`

FEATURE POINT TRIANGLE AREA RATIO CALCULATION MODULE `R17`

REGION COMBINATION CALCULATION MODULE `R12`

CUMULATIVE PIXEL VALUE RATIO CALCULATION MODULE `R13`

FEATURE POINT TRIANGLE AREA RATIO STORAGE MODULE `R18`

CUMULATIVE PIXEL VALUE RATIO STORAGE MODULE `R14`

RETRIEVAL MODULE

CONNECTED REGION CALCULATION MODULE `Q11`

REGION COMBINATION CALCULATION MODULE `Q12`

FEATURE POINT TRIANGLE AREA RATIO CALCULATION MODULE `Q16`

CUMULATIVE PIXEL VALUE RATIO CALCULATION MODULE `Q13`

CUMULATIVE PIXEL VALUE RATIO MATCHING DETERMINATION MODULE `Q14`

INVARIANT VERIFICATION MODULE `Q17`

EP 2 251 830 A1

# FIG.14

```
                              ┌─ SR11
┌────────────────────────────┐
│  CALCULATE CONNECTED REGION │
│     FROM INPUT IMAGE        │
└────────────────────────────┘
                                 FOR ALL CONNECTED REGIONS
                                 OBTAINED FROM REGISTERING IMAGE

                              ┌─ SR12
┌────────────────────────────┐
│ SET ONE TARGET CONNECTED REGION │  FOR ALL REGION ARRANGEMENTS
└────────────────────────────┘     OBTAINED FROM TARGET
                                    CONNECTED REGION

                              ┌─ SR13
┌────────────────────────────┐
│  EXTRACT REGION ARRANGEMENT │
└────────────────────────────┘

                              ┌─ SRC14
┌────────────────────────────┐
│  OBTAIN Lm, CALCULATE ROW OF│
│ INVARIANTS FROM Lm, STORE ROW│
│      OF INVARIANTS          │
└────────────────────────────┘

                              ┌─ SR15
┌────────────────────────────┐
│     OBTAIN ROWS OF Lf       │
└────────────────────────────┘

                              ┌─ SR16
┌────────────────────────────┐
│  CALCULATE FEATURE VECTOR   │
│ INCLUDING CUMULATIVE PIXEL VALUE│
│     RATIO AS COMPONENT      │
└────────────────────────────┘

                              ┌─ SRC17
┌────────────────────────────┐
│  STORE FEATURE VECTOR AND   │
│ INFORMATION WHICH CAN UNIQUELY│
│   SPECIFY ROW OF INVARIANTS │
└────────────────────────────┘
```

EP 2 251 830 A1

# FIG.15

CALCULATE CONNECTED REGION FROM INPUT IMAGE — SQ11

FOR ALL CONNECTED REGIONS OBTAINED FROM REGISTERING IMAGE

SET ONE TARGET CONNECTED REGION — SQ12

FOR ALL REGION ARRANGEMENTS OBTAINED FROM TARGET CONNECTED REGION

EXTRACT REGION ARRANGEMENT — SQ13

OBTAIN Lm — SQ14

OBTAIN ROWS OF Lf — SQ15

CALCULATE FEATURE VECTOR INCLUDING CUMULATIVE PIXEL VALUE RATIO AS COMPONENT — SQ16

FOR ALL FEATURE VECTORS STORED REGISTERING IMAGE CUMULATIVE PIXEL VALUE RATIO STORAGE UNIT R14

MATCH FEATURE VECTOR — SQC17

# FIG.16

CALCULATE DEGREE OF DISCREPANCY OR DEGREE OF SIMILARITY BETWEEN FEATURE VECTORS — SQC171

VALUE OF DEGREE OF DISCREPANCY OR DEGREE OF SIMILARITY LIES WITHIN PREDETERMINED RANGE — SQC172

NO

YES

CALCULATE ROW OF INVARIANTS FROM RETRIVING IMAGE — SQC173

OBTAIN ROW OF INVARIANTS FROM REGISTERING IMAGE — SQC174

DETERMINE WHETHER MATCHING IS FOUND, AND OUTPUT RESULT — SQC175

OUTPUT RESULT (MISMATCH) — SQC177

SQC17

# FIG.17

REGISTERING IMAGE1
REGISTERING IMAGE2
⋮
REGISTERING IMAGENr

RETRIEVING IMAGE

REGISTRATION
MODULE

CONNECTED REGION
CALCULATION MODULE
R11

RETRIEVAL
MODULE

CONNECTED REGION
CALCULATION MODULE
Q11

RESULT OUTPUT UNIT
Q2

IMAGE MATCHING DEVICE

FINAL MATCHING
DETERMINATION UNIT
Q3

FINAL DETERMINATION
RESULT

34

# FIG.18

IMAGE MATCHING DEVICE

CPU 1

RAM 2

HARD DISC 3

FIG.19

ComA

COMPUTER

COMMUNICATION LINE

ScA

IMAGING DEVICE

COMMUNICATION LINE

ComB

COMPUTER

COMMUNICATION LINE

ComC

COMPUTER

COMMUNICATION LINE

ScB

IMAGING DEVICE

EP 2 251 830 A1

<div style="text-align:center">**INTERNATIONAL SEARCH REPORT**</div>

| International application No. |
| --- |
| PCT/JP2009/053824 |

A. CLASSIFICATION OF SUBJECT MATTER
*G06T7/00*(2006.01)i

According to International Patent Classification (IPC) or to both national classification and IPC

B. FIELDS SEARCHED

Minimum documentation searched (classification system followed by classification symbols)
G06T7/00

Documentation searched other than minimum documentation to the extent that such documents are included in the fields searched
Jitsuyo Shinan Koho          1922-1996   Jitsuyo Shinan Toroku Koho    1996-2009
Kokai Jitsuyo Shinan Koho    1971-2009   Toroku Jitsuyo Shinan Koho    1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2006-48245 A  (Sharp Corp.), 16 February, 2006 (16.02.06), Full text; all drawings & US 2006/0023235 A1    & CN 1734454 A | 1-22 |
| A | JP 2001-266149 A  (Alpine Electronics, Inc.), 28 September, 2001 (28.09.01), Full text; all drawings (Family: none) | 1-22 |

[X] Further documents are listed in the continuation of Box C.      [ ] See patent family annex.

| | |
| --- | --- |
| * Special categories of cited documents:<br>"A"  document defining the general state of the art which is not considered   to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |
| Date of the actual completion of the international search<br>   19 March, 2009 (19.03.09) | Date of mailing of the international search report<br>   28 April, 2009 (28.04.09) |
| Name and mailing address of the ISA/<br>   Japanese Patent Office | Authorized officer |
| Facsimile No. | Telephone No. |

Form PCT/ISA/210 (second sheet) (April 2007)

<table>
<tr><td colspan="2" align="center"><strong>INTERNATIONAL SEARCH REPORT</strong></td><td>International application No.<br>PCT/JP2009/053824</td></tr>
</table>

C (Continuation). DOCUMENTS CONSIDERED TO BE RELEVANT

| Category* | Citation of document, with indication, where appropriate, of the relevant passages | Relevant to claim No. |
|---|---|---|
| A | Tomohiro NAKAI et al., "Tokuchoten no Kyokushoteki Haichi ni Motozuku Digital Camera o Mochiita Kosoku Bunsho Gazo Kensaku", The Transactions of the Institute of Electronics, Information and Communication Engineers (J89-D), No.9, Vol.J89-D, The Institute of Electronics, Information and Communication Engineers, 01 September, 2006 (01.09.06), pages 2045 to 2054 | 1-22 |
| A | Tomohiro NAKAI et al., "Digital Camera o Mochiita Kosoku Bunsho Gazo Kensaku ni Okeru Affine Fuhenryo Oyobi Soji Fuhenryo no Riyo", IEICE Technical Report, Vol.105, No.614, Vol.105, The Institute of Electronics, Information and Communication Engineers, 16 February, 2006 (16.02.06), pages 25 to 30 | 1-22 |

Form PCT/ISA/210 (continuation of second sheet) (April 2007)

**EP 2 251 830 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

Patent documents cited in the description

- JP 2000259836 A

- JP 2008053925 A

**Non-patent literature cited in the description**

- **Tomohiro NAKAI et al.** Use of Affine Invariants and Similarity Invariants in Fast Camera-based Document Image Retrieval. *IEICE Technical Report, (Pattern Recognition and Media Understanding PRMU-184 to 201) The Institute of Electronics, Information and Communication Engineers,* 16 February 2006, 25-30

- **Ikeyama, Tamotsu ; Toyokazu Hirayama.** Differentiation and Integration for Science and Technology. Shokabou Publishing, 25 May 2006, 137